(19) Europäisches Patentamt
European Patent Office
Office européen des brevets

(11) EP 4 365 221 A1

(12) EUROPEAN PATENT APPLICATION
published in accordance with Art. 153(4) EPC

(43) Date of publication:
**08.05.2024 Bulletin 2024/19**

(21) Application number: **22833165.8**

(22) Date of filing: **28.06.2022**

(51) International Patent Classification (IPC):
***C08J 3/00*** *(2006.01)* ***B29B 17/00*** *(2006.01)*
***C08J 11/08*** *(2006.01)* ***C08L 33/02*** *(2006.01)*
***C09J 133/00*** *(2006.01)*

(52) Cooperative Patent Classification (CPC):
**B29B 17/00; C08J 3/00; C08J 11/08; C08L 33/02; C09J 133/00;** Y02W 30/62

(86) International application number:
**PCT/JP2022/025770**

(87) International publication number:
**WO 2023/277018 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2021 JP 2021109432**
**02.02.2022 JP 2022014724**

(71) Applicant: **Nitto Denko Corporation**
**Ibaraki-shi, Osaka 567-8680 (JP)**

(72) Inventors:
- **YAMADA, Yosuke**
**Ibaraki-shi, Osaka 567-8680 (JP)**
- **YAMAMOTO, Akiyoshi**
**Ibaraki-shi, Osaka 567-8680 (JP)**
- **NOMURA, Takayuki**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **METHOD FOR PRODUCING WATER-SOLUBLE POLYMER, METHOD FOR PRODUCING WATER-ABSORBENT POLYMER, WATER-SOLUBLE POLYMER, AND WATER-ABSORBENT POLYMER**

(57) Provided are a method for producing a water-soluble polymer in which a water-soluble polymer can be produced from a pressure-sensitive adhesive as waste under a mild condition, a method for producing a water-absorbent polymer in which a water-absorbent polymer can be produced from a pressure-sensitive adhesive under a mild condition, a water-soluble polymer that can be produced from a pressure-sensitive adhesive, and a water-absorbent polymer that can be produced from a pressure-sensitive adhesive. A method for producing a water-soluble polymer according to an embodiment of the present invention includes bringing a pressure-sensitive adhesive treatment liquid which contains a liquid having a Hansen solubility parameter value of 31 or less and an alkaline compound and in which a concentration of the alkaline compound in the pressure-sensitive adhesive treatment liquid is from 0.001 wt% to 20 wt%, into contact with a pressure-sensitive adhesive.

EP 4 365 221 A1

## Description

### TECHNICAL FIELD

The present invention relates to a method for producing a water-soluble polymer. The present invention also relates to a method for producing a water-absorbent polymer. The present invention also relates to a water-soluble polymer. The present invention also relates to a water-absorbent polymer.

### BACKGROUND ART

As a hydrophilic polymer having affinity to water, for example, water-soluble polymers used as materials of various industrial products and water-absorbent polymers used for absorbent articles such as paper diapers are known. As a method for producing such hydrophilic polymer, for example, a technique in which monomers are heated and polymerized at about 175°C in the presence of a catalyst, to produce a hydrophilic polymer, has been reported (Patent Literature 1).
However, in the technique disclosed in Patent Literature 1, a condition of an extremely high temperature of, for example, higher than 150°C needs to be selected, and there is a limit in enhancement of efficiency for producing a hydrophilic polymer.
In recent years, polymers have been desired to be produced from waste from the viewpoint of reducing environmental load. Particularly, if hydrophilic polymers, such as water-soluble polymers and water-absorbent polymers, which are used industrially for a wide range of usages can be reproduced from waste under a mild condition, contribution to reduction of environmental load is large. In this case, it may be very preferable if waste generated in a large amount can be used.

### CITATION LIST

#### Patent Literature

Patent Literature 1: JP 3917178B2

### SUMMARY OF INVENTION

#### Technical Problem

Examination has been performed for finding waste from which hydrophilic polymers, such as water-soluble polymers and water-absorbent polymers, can be produced under a mild condition and which can be generated in a large amount. As a result, attention has been paid to pressure-sensitive adhesives as waste, such as pressure-sensitive adhesives in pressure-sensitive adhesive tapes collected after being used, pressure-sensitive adhesives which remain as residues on adherends when pressure-sensitive adhesive tapes are peeled off from the adherends to which the pressure-sensitive adhesive tapes are adhered, and pressure-sensitive adhesives adhered to pressure-sensitive adhesive producing devices. The technique for reproducing hydrophilic polymers, such as water-soluble polymers and water-absorbent polymers, from such pressure-sensitive adhesives as waste under a mild condition has been thoroughly examined, and the present invention has been completed.
An object of the present invention is to provide a method for producing a water-soluble polymer in which a water-soluble polymer can be produced from a pressure-sensitive adhesive under a mild condition, a method for producing a water-absorbent polymer in which a water-absorbent polymer can be produced from a pressure-sensitive adhesive under a mild condition, a water-soluble polymer that can be produced from a pressure-sensitive adhesive, and a water-absorbent polymer that can be produced from a pressure-sensitive adhesive.

#### Solution to Problem

A method for producing a water-soluble polymer according to an embodiment of the present invention includes bringing a pressure-sensitive adhesive treatment liquid which contains a liquid having a Hansen solubility parameter value of 31 or less and an alkaline compound and in which a concentration of the alkaline compound in the pressure-sensitive adhesive treatment liquid is from 0.001 wt% to 20 wt%, into contact with a pressure-sensitive adhesive.
According to one embodiment, the Hansen solubility parameter value of the liquid is 15 or more and 25 or less, and the liquid contains a lower alcohol.
According to one embodiment, the pressure-sensitive adhesive is formed of an acrylic pressure-sensitive adhesive.

According to one embodiment, the concentration of the alkaline compound in the treatment liquid is from 0.01 wt% to 10 wt%.

A water-soluble polymer according to an embodiment of the present invention is a water-soluble polymer obtained by the method for producing a water-soluble polymer according to the embodiment of the present invention, and the water-soluble polymer includes a structural unit (1) represented by a following formula, and a structural unit (2) represented by a following formula,

[Chem. 1]

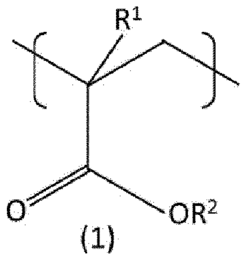
(1)
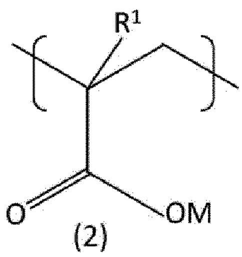
(2)

(in the formulas, $R^1$ represents a hydrogen atom or a methyl group, $R^2$ represents an alkyl group having 1 to 12 carbon atoms, and M represents a hydrogen atom or a cation).

A method for producing a water-absorbent polymer according to an embodiment of the present invention includes causing the water-soluble polymer obtained by the method for producing a water-soluble polymer according to the embodiment of the present invention, and a cross-linking agent to react with each other.

A method for producing a water-absorbent polymer according to an embodiment of the present invention includes bringing a pressure-sensitive adhesive treatment liquid which contains a liquid having a Hansen solubility parameter value of 31 or less and an alkaline compound and in which a concentration of the alkaline compound in the pressure-sensitive adhesive treatment liquid is from 0.001 wt% to 20 wt%, a cross-linking agent, and a pressure-sensitive adhesive into contact with one another.

A water-absorbent polymer according to an embodiment of the present invention includes a structural unit (1) represented by a following formula, a structural unit (2) represented by a following formula, and a cross-linked structure formed by a reaction between the structural unit (1) and/or the structural unit (2), and a cross-linking agent,

[Chem. 2]

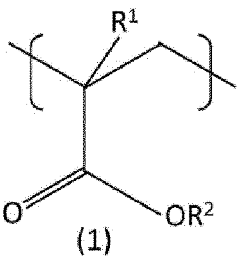
(1)
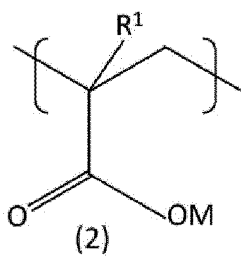
(2)

(in the formulas, $R^1$ represents a hydrogen atom or a methyl group, $R^2$ represents an alkyl group having 1 to 12 carbon atoms, and M represents a hydrogen atom or a cation).

Advantageous Effects of Invention

The present invention can provide a method for producing a water-soluble polymer in which a water-soluble polymer can be produced from a pressure-sensitive adhesive under a mild condition, a method for producing a water-absorbent polymer in which a water-absorbent polymer can be produced from a pressure-sensitive adhesive under a mild condition, a water-soluble polymer that can be produced from a pressure-sensitive adhesive, and a water-absorbent polymer that can be produced from a pressure-sensitive adhesive.

DESCRIPTION OF EMBODIMENTS

When the expression "weight" is used herein, the expression may be replaced with "mass" that has been commonly used as an SI unit for representing a weight.
When the expression "(meth)acrylic" is used herein, the expression means "acrylic and/or methacrylic", when the expression "(meth)acrylate" is used herein, the expression means "acrylate and/or methacrylate", when the expression "(meth)allyl" is used herein, the expression means "allyl and/or methallyl", and when the expression "(meth)acrolein" is used herein, the expression means "acrolein and/or methacrolein".

««1. Method for Producing Water-soluble Polymer»»

A method for producing a water-soluble polymer according to an embodiment of the present invention includes bringing a pressure-sensitive adhesive and a pressure-sensitive adhesive treatment liquid into contact with each other, to produce a water-soluble polymer from the pressure-sensitive adhesive. The method for producing a water-soluble polymer according to the embodiment of the present invention allows water-soluble polymers to be produced from pressure-sensitive adhesives by recycling various kinds of pressure-sensitive adhesives.

«1-1. Pressure-sensitive Adhesive»

As a pressure-sensitive adhesive used as a material of a water-soluble polymer, any appropriate pressure-sensitive adhesive can be adopted to the extent that the effects of the present invention are not impaired. Typical examples of such pressure-sensitive adhesive include pressure-sensitive adhesives as waste, and include pressure-sensitive adhesives in pressure-sensitive adhesive tapes collected after being used, pressure-sensitive adhesives that remain as residues on adherends when pressure-sensitive adhesive tapes are peeled off from the adherends to which the pressure-sensitive adhesive tapes are adhered, and pressure-sensitive adhesives adhered to pressure-sensitive adhesive producing devices.
The pressure-sensitive adhesive tape typically includes a pressure-sensitive adhesive layer formed of a pressure-sensitive adhesive and a base material. The number of the pressure-sensitive adhesive layers may be only one, or two or more.
Examples of such adherend include such adherends that a risk that a slight adhesive residue causes reductions in functions of the adherends is taken into consideration, the adherends including: electronic devices, such as a silicon wafer, a semiconductor circuit board, and a ceramic capacitor; and optical materials, such as an optical film and optical glass.
Examples of the pressure-sensitive adhesive producing device include a polymerization vessel, a compounding device, and a coating machine.
The pressure-sensitive adhesive is in the form of a pressure-sensitive adhesive layer included in a pressure-sensitive adhesive tape, in the form of a pressure-sensitive adhesive remaining as residue on an adherend, or in the form of a pressure-sensitive adhesive adhered to a producing device, such as a polymerization vessel, a compounding device, or a coating machine. Therefore, the size and the shape thereof vary. For example, in the form of a pressure-sensitive adhesive layer included in a pressure-sensitive adhesive tape, the thickness of the pressure-sensitive adhesive tape is preferably from 1 $\mu$m to 2000 $\mu$m because the effects of the present invention can be further expressed.
The pressure-sensitive adhesive is preferably formed of at least one kind selected from the group consisting of an acrylic pressure-sensitive adhesive, a urethane-based pressure-sensitive adhesive, a rubber-based pressure-sensitive adhesive, and a silicone-based pressure-sensitive adhesive, is more preferably formed of at least one kind selected from the group consisting of an acrylic pressure-sensitive adhesive, a urethane-based pressure-sensitive adhesive, and a silicone-based pressure-sensitive adhesive, and is still more preferably formed of an acrylic pressure-sensitive adhesive.
The pressure-sensitive adhesive can be formed by any appropriate method. Examples of such method include a method including: applying a pressure-sensitive adhesive composition (at least one kind selected from the group consisting of an acrylic pressure-sensitive adhesive composition, a urethane-based pressure-sensitive adhesive composition, a rubber-based pressure-sensitive adhesive composition, and a silicone-based pressure-sensitive adhesive composition) onto any appropriate base material; heating and drying the obtained product as necessary; and curing the obtained product as necessary, to form a pressure-sensitive adhesive (specifically, pressure-sensitive adhesive layer) on the base material. Examples of such application method include methods using a gravure roll coater, a reverse roll coater, a kiss roll coater, a dip roll coater, a bar coater, a knife coater, an air knife coater, a spray coater, a comma coater, a direct coater, a roll brush coater, and a die coater.

<Acrylic Pressure-sensitive Adhesive>

The acrylic pressure-sensitive adhesive is formed from the acrylic pressure-sensitive adhesive composition.

The acrylic pressure-sensitive adhesive composition preferably contains an acrylic polymer and a cross-linking agent because the effects of the present invention can be further expressed.

The acrylic polymer is what may be called a base polymer in the field of acrylic pressure-sensitive adhesives. The number of kinds of the acrylic polymers may be only one, or two or more.

The content of the acrylic polymer in the acrylic pressure-sensitive adhesive composition is preferably from 50 wt% to 100 wt%, more preferably from 60 wt% to 100 wt%, still more preferably from 70 wt% to 100 wt%, particularly preferably from 80 wt% to 100 wt%, most preferably from 90 wt% to 100 wt% in terms of solid content.

Any appropriate acrylic polymer may be adopted as the acrylic polymer to the extent that the effects of the present invention are not impaired.

The weight-average molecular weight of the acrylic polymer is preferably from 100,000 to 3,000,000, more preferably from 150,000 to 2,000,000, still more preferably from 200,000 to 1,500,000, particularly preferably from 250,000 to 1,000,000 because the effects of the present invention can be further expressed.

The acrylic polymer is preferably an acrylic polymer formed through polymerization from a composition (A) containing a (meth)acrylic acid alkyl ester whose alkyl ester moiety has an alkyl group having 4 to 12 carbon atoms (component "a"), and at least one kind selected from the group consisting of: a (meth)acrylic acid ester having a OH group; and (meth)acrylic acid (component "b") because the effects of the present invention can be further expressed. The number of kinds of the components "a" and the number of kinds of the components "b" may each be independently only one, or two or more.

Examples of the (meth)acrylic acid alkyl ester whose alkyl ester moiety has an alkyl group having 4 to 12 carbon atoms (component "a") include n-butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate. Of those, n-butyl (meth)acrylate and 2-ethylhexyl (meth)acrylate are preferred, and n-butyl acrylate and 2-ethylhexyl acrylate are more preferred because the effects of the present invention can be further expressed.

Examples of the at least one kind selected from the group consisting of: a (meth)acrylic acid ester having a OH group; and (meth)acrylic acid (component "b") include: (meth)acrylic acid esters each having a OH group, such as hydroxyethyl (meth)acrylate, hydroxypropyl (meth)acrylate, and hydroxybutyl (meth)acrylate; and (meth)acrylic acid. Of those, hydroxyethyl (meth)acrylate and (meth)acrylic acid are preferred, and hydroxyethyl acrylate and acrylic acid are more preferred because the effects of the present invention can be further expressed.

The composition (A) may contain a copolymerizable monomer except the component "a" and the component "b". The number of kinds of the copolymerizable monomers may be only one, or two or more. Examples of such copolymerizable monomer include: carboxyl group-containing monomers (provided that (meth)acrylic acid is excluded), such as itaconic acid, maleic acid, fumaric acid, crotonic acid, isocrotonic acid, and acid anhydrides thereof (e.g., acid anhydride group-containing monomers, such as maleic anhydride and itaconic anhydride); amide group-containing monomers, such as (meth)acrylamide, N,N-dimethyl (meth)acrylamide, N-methylol (meth)acrylamide, N-methoxymethyl (meth)acrylamide, N-butoxymethyl (meth)acrylamide, and N-hydroxyethyl (meth)acrylamide; amino group-containing monomers, such as aminoethyl (meth)acrylate, dimethylaminoethyl (meth)acrylate, and t-butylaminoethyl (meth)acrylate; epoxy group-containing monomers, such as glycidyl (meth)acrylate and methylglycidyl (meth)acrylate; cyano group-containing monomers, such as acrylonitrile and methacrylonitrile; heterocycle-containing vinyl-based monomers, such as N-vinyl-2-pyrrolidone, (meth)acryloylmorpholine, N-vinylpiperidone, N-vinylpiperazine, N-vinylpyrrole, N-vinylimidazole, vinylpyridine, vinylpyrimidine, and vinyloxazole; sulfonic acid group-containing monomers such as sodium vinylsulfonate; phosphoric acid group-containing monomers such as 2-hydroxyethylacryloyl phosphate; imide group-containing monomers, such as cyclohexylmaleimide and isopropylmaleimide; isocyanate group-containing monomers such as 2-methacryloyloxyethyl isocyanate; (meth)acrylic acid esters each having an alicyclic hydrocarbon group, such as cyclopentyl (meth)acrylate, cyclohexyl (meth)acrylate, and isobornyl (meth)acrylate; (meth)acrylic acid esters each having an aromatic hydrocarbon group, such as phenyl (meth)acrylate, phenoxyethyl (meth)acrylate, and benzyl (meth)acrylate; vinyl esters, such as vinyl acetate and vinyl propionate; aromatic vinyl compounds, such as styrene and vinyltoluene; olefins and dienes, such as ethylene, butadiene, isoprene, and isobutylene; vinyl ethers such as a vinyl alkyl ether; and vinyl chloride.

A polyfunctional monomer may also be adopted as the copolymerizable monomer. The "polyfunctional monomer" refers to a monomer having two or more ethylenically unsaturated groups in a molecule thereof. Any appropriate ethylenically unsaturated groups may be adopted as the ethylenically unsaturated groups to the extent that the effects of the present invention are not impaired. Examples of such ethylenically unsaturated group include radical-polymerizable functional groups, such as a vinyl group, a propenyl group, an isopropenyl group, a vinyl ether group (vinyloxy group), and an allyl ether group (allyloxy group). Examples of the polyfunctional monomer include hexanediol di(meth)acrylate,

butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, and urethane acrylate. The number of kinds of such polyfunctional monomers may be only one, or two or more.

A (meth)acrylic acid alkoxyalkyl ester may also be adopted as the copolymerizable monomer. Examples of the (meth)acrylic acid alkoxyalkyl ester include 2-methoxyethyl (meth)acrylate, 2-ethoxyethyl (meth)acrylate, methoxytriethylene glycol (meth)acrylate, 3-methoxypropyl (meth)acrylate, 3-ethoxypropyl (meth)acrylate, 4-methoxybutyl (meth)acrylate, and 4-ethoxybutyl (meth)acrylate. The number of kinds of the (meth)acrylic acid alkoxyalkyl esters may be only one, or two or more.

The content of the (meth)acrylic acid alkyl ester whose alkyl ester moiety has an alkyl group having 4 to 12 carbon atoms (component "a") is preferably 50 wt% or more, more preferably from 60 wt% to 100 wt%, still more preferably from 70 wt% to 100 wt%, particularly preferably from 80 wt% to 100 wt% with respect to the total amount (100 wt%) of the monomer components for forming the acrylic polymer because the effects of the present invention can be further expressed.

The content of the at least one kind selected from the group consisting of: a (meth)acrylic acid ester having a OH group; and (meth)acrylic acid (component "b") is preferably 0.1 wt% or more, more preferably from 1.0 wt% to 50 wt%, still more preferably from 1.5 wt% to 40 wt%, particularly preferably from 2.0 wt% to 30 wt% with respect to the total amount (100 wt%) of the monomer components for forming the acrylic polymer because the effects of the present invention can be further expressed.

In the acrylic polymer, the total of the contents of the above-described (component "a"), the above-described (component "b"), and the carboxyl group-containing monomer is preferably from 5 wt% to 95 wt%, more preferably from 10 wt% to 95 wt%, still more preferably from 15 wt% to 95 wt%, still more preferably from 20 wt% to 95 wt%, still more preferably from 25 wt% to 95 wt%, still more preferably from 30 wt% to 95 wt%, particularly preferably from 35 wt% to 90 wt%, and most preferably from 40 wt% to 90 wt% with respect to the total amount (100 wt%) of the monomer components.

The composition (A) may contain any appropriate other component to the extent that the effects of the present invention are not impaired. Examples of such other component include a polymerization initiator, a chain transfer agent, and a solvent. Any appropriate content may be adopted as the content of each of those other components to the extent that the effects of the present invention are not impaired.

A thermal polymerization initiator, a photopolymerization initiator (photoinitiator), or the like may be adopted as the polymerization initiator in accordance with the kind of a polymerization reaction. The number of kinds of the polymerization initiators may be only one, or two or more.

The thermal polymerization initiator may be preferably adopted at the time of the production of the acrylic polymer by solution polymerization. Examples of such thermal polymerization initiator include an azo-based polymerization initiator, a peroxide-based polymerization initiator (e.g., dibenzoyl peroxide or tert-butyl permaleate), and a redox-based polymerization initiator. Of those thermal polymerization initiators, an azo-based polymerization initiator disclosed in JP 2002-69411 A is particularly preferred. Such azo-based polymerization initiator is preferred because a decomposed product of the polymerization initiator hardly remains as a portion, which serves as a cause for the generation of a heat-generated gas (outgas), in the acrylic polymer. Examples of the azo-based polymerization initiator include 2,2'-azobisisobutyronitrile (hereinafter sometimes referred to as "AIBN"), 2,2'-azobis-2-methylbutyronitrile (hereinafter sometimes referred to as "AMBN"), dimethyl 2,2'-azobis(2-methylpropionate), and 4,4'-azobis-4-cyanovaleric acid. The usage amount of the azo-based polymerization initiator is preferably from 0.01 part by weight to 5.0 parts by weight, more preferably from 0.05 part by weight to 4.0 parts by weight, still more preferably from 0.1 part by weight to 3.0 parts by weight, particularly preferably from 0.15 part by weight to 3.0 parts by weight, most preferably from 0.20 part by weight to 2.0 parts by weight with respect to the total amount (100 parts by weight) of the monomer components for forming the acrylic polymer.

The photopolymerization initiator may be preferably adopted at the time of the production of the acrylic polymer by active energy ray polymerization. Examples of the photopolymerization initiator include a benzoin ether-based photopolymerization initiator, an acetophenone-based photopolymerization initiator, an $\alpha$-ketol-based photopolymerization initiator, an aromatic sulfonyl chloride-based photopolymerization initiator, a photoactive oxime-based photopolymerization initiator, a benzoin-based photopolymerization initiator, a benzil-based photopolymerization initiator, a benzophenone-based photopolymerization initiator, a ketal-based photopolymerization initiator, and a thioxanthone-based photopolymerization initiator.

Examples of the benzoin ether-based photopolymerization initiator include benzoin methyl ether, benzoin ethyl ether, benzoin propyl ether, benzoin isopropyl ether, benzoin isobutyl ether, 2,2-dimethoxy-1 ,2-diphenylethan-1-one, and anisole methyl ether. Examples of the acetophenone-based photopolymerization initiator include 2,2-diethoxyacetophenone, 2,2-dimethoxy-2-phenylacetophenone, 1-hydroxycyclohexyl phenyl ketone, 4-phenoxydichloroacetophenone, and 4-(t-butyl)dichloroacetophenone. Examples of the α-ketol-based photopolymerization initiator include 2-methyl-2-hydroxypropiophenone and 1-[4-(2-hydroxyethyl)phenyl]-2-methylpropane-1-one. An example of the aromatic sulfonyl chloride-based photopolymerization initiator is 2-naphthalenesulfonyl chloride. An example of the photoactive oxime-based photopolymerization initiator is 1-phenyl-1,1-propanedione-2-(o-ethoxycarbonyl)-oxime. An example of the benzoin-based photopolymerization initiator is benzoin. An example of the benzil-based photopolymerization initiator is benzil. Examples of the benzophenone-based photopolymerization initiator include benzophenone, benzoyl benzoic acid, 3,3'-dimethyl-4-methoxybenzophenone, polyvinylbenzophenone, and α-hydroxycyclohexyl phenyl ketone. An example of the ketal-based photopolymerization initiator is benzyl dimethyl ketal. Examples of the thioxanthone-based photopolymerization initiator include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

The usage amount of the photopolymerization initiator is preferably from 0.01 part by weight to 3.0 parts by weight, more preferably from 0.015 part by weight to 2.0 parts by weight, still more preferably from 0.02 part by weight to 1.5 parts by weight, particularly preferably from 0.025 part by weight to 1.0 part by weight, most preferably from 0.03 part by weight to 0.50 part by weight with respect to the total amount (100 parts by weight) of the monomer components for forming the acrylic polymer.

The acrylic pressure-sensitive adhesive composition may contain a cross-linking agent. When the cross-linking agent is used, the cohesive strength of the acrylic pressure-sensitive adhesive can be improved, and hence the effects of the present invention can be further expressed. The number of kinds of the cross-linking agents may be only one, or two or more.

Examples of the cross-linking agent include a polyfunctional isocyanate-based cross-linking agent, an epoxy-based cross-linking agent, a melamine-based cross-linking agent, and a peroxide-based cross-linking agent, and as well, a urea-based cross-linking agent, a metal alkoxide-based cross-linking agent, a metal chelate-based cross-linking agent, a metal salt-based cross-linking agent, a carbodiimide-based cross-linking agent, an oxazoline-based cross-linking agent, an aziridine-based cross-linking agent, and an amine-based cross-linking agent. Of those, at least one kind selected from the group consisting of: a polyfunctional isocyanate-based cross-linking agent; and an epoxy-based cross-linking agent (component "c") is preferred because the effects of the present invention can be further expressed.

Examples of the polyfunctional isocyanate-based cross-linking agent include: lower aliphatic polyisocyanates, such as 1,2-ethylene diisocyanate, 1,4-butylene diisocyanate, and 1,6-hexamethylene diisocyanate; alicyclic polyisocyanates, such as cyclopentylene diisocyanate, cyclohexylene diisocyanate, isophorone diisocyanate, hydrogenated tolylene diisocyanate, and hydrogenated xylene diisocyanate; and aromatic polyisocyanates, such as 2,4-tolylene diisocyanate, 2,6-tolylene diisocyanate, 4,4'-diphenylmethane diisocyanate, and xylylene diisocyanate. Examples of the polyfunctional isocyanate-based cross-linking agent also include commercially available products, such as a trimethylolpropane/tolylene diisocyanate adduct (manufactured by Nippon Polyurethane Industry Co., Ltd., product name: "CORONATE L"), a trimethylolpropane/hexamethylene diisocyanate adduct (manufactured by Nippon Polyurethane Industry Co., Ltd., product name: "CORONATE HL"), a product available under the product name "CORONATE HX" (Nippon Polyurethane Industry Co., Ltd.), and a trimethylolpropane/xylylene diisocyanate adduct (manufactured by Mitsui Chemicals, Inc., product name: "TAKENATE 110N").

Examples of the epoxy-based cross-linking agent (polyfunctional epoxy compound) include N,N,N',N'-tetraglycidyl-m-xylenediamine, diglycidylaniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcinol diglycidyl ether, bisphenol-S-diglycidyl ether, and an epoxy-based resin having two or more epoxy groups in a molecule thereof. Examples of the epoxy-based cross-linking agent also include commercially available products such as a product available under the product name "TETRAD-C" (manufactured by Mitsubishi Gas Chemical Company, Inc.).

Any appropriate content may be adopted as the content of the cross-linking agent in the acrylic pressure-sensitive adhesive composition to the extent that the effects of the present invention are not impaired. Such content is, for example, preferably from 0.1 part by weight to 5.0 parts by weight, more preferably from 0.2 part by weight to 4.5 parts by weight, still more preferably from 0.3 part by weight to 4.0 parts by weight, particularly preferably from 0.4 part by weight to 3.5 parts by weight with respect to the solid content (100 parts by weight) of the acrylic polymer because the effects of the present invention can be further expressed.

The acrylic pressure-sensitive adhesive composition may contain any appropriate other component to the extent that the effects of the present invention are not impaired. Examples of such other component include a polymer component except the acrylic polymer, a cross-linking accelerator, a cross-linking catalyst, a silane coupling agent, a tackifier resin (e.g., a rosin derivative, a polyterpene resin, a petroleum resin, or an oil-soluble phenol), an age resistor, an inorganic filler, an organic filler, a metal powder, a colorant (e.g., a pigment or a dye), a foil-like material, a UV absorber, an antioxidant, a light stabilizer, a chain transfer agent, a plasticizer, a softening agent, a surfactant, an antistatic

agent, a conductive agent, a stabilizer, a surface lubricant, a leveling agent, a corrosion inhibitor, a heat stabilizer, a polymerization inhibitor, a lubricant, a solvent, and a catalyst.

<Silicone-based Pressure-sensitive Adhesive>

For example, any appropriate silicone-based pressure-sensitive adhesive such as a known silicone-based pressure-sensitive adhesive described in JP 2014-047280 A or the like may be adopted as the silicone-based pressure-sensitive adhesive to the extent that the effects of the present invention are not impaired. The number of kinds thereof may be only one, or two or more. The silicone-based pressure-sensitive adhesive may contain any appropriate component to the extent that the effects of the present invention are not impaired.

<Urethane-based Pressure-sensitive Adhesive>

The urethane-based pressure-sensitive adhesive is formed of the urethane-based pressure-sensitive adhesive composition.

The urethane-based pressure-sensitive adhesive composition preferably contains at least one kind selected from the group consisting of: a urethane prepolymer; and a polyol, and a cross-linking agent because the effects of the present invention can be further expressed.

The at least one kind selected from the group consisting of: a urethane prepolymer; and a polyol is what may be called a base polymer in the field of urethane-based pressure-sensitive adhesives. The number of kinds of the urethane prepolymers may be only one, or two or more. The number of kinds of the polyols may be only one, or two or more.

[Urethane Prepolymer]

The urethane prepolymer is preferably a polyurethane polyol, more preferably a product obtained by allowing one of a polyester polyol (a1) or a polyether polyol (a2) alone, or a mixture of (a1) and (a2) to react with an organic polyisocyanate compound (a3) in the presence or absence of a catalyst.

Any appropriate polyester polyol may be used as the polyester polyol (a1). Such polyester polyol (a1) is, for example, a polyester polyol obtained by allowing an acid component and a glycol component to react with each other. Examples of the acid component include terephthalic acid, adipic acid, azelaic acid, sebacic acid, phthalic anhydride, isophthalic acid, and trimellitic acid. Examples of the glycol component include ethylene glycol, propylene glycol, diethylene glycol, butylene glycol, 1,6-hexane glycol, 3-methyl-1,5-pentanediol, 3,3'-dimethylolheptane, polyoxyethylene glycol, polyoxypropylene glycol, 1,4-butanediol, neopentyl glycol, butylethylpentanediol, and glycerin, trimethylolpropane, or pentaerythritol serving as a polyol component. Other examples of the polyester polyol (a1) include polyester polyols obtained by subjecting lactones, such as polycaprolactone, poly(β-methyl-γ-valerolactone), and polyvalerolactone, to ring-opening polymerization.

Any value in the range of from a low molecular weight to a high molecular weight may be used as the molecular weight of the polyester polyol (a1). The molecular weight of the polyester polyol (a1) is preferably from 100 to 100,000 in terms of number-average molecular weight because the effects of the present invention can be further expressed. When the number-average molecular weight is less than 100, there is a risk in that the reactivity of the polyol becomes higher, and hence the polyol is liable to gel. When the number-average molecular weight is more than 100,000, there is a risk in that the reactivity reduces, and the cohesive strength of the polyurethane polyol itself reduces. The usage amount of the polyester polyol (a1) is preferably from 0 mol% to 90 mol% in the polyols for forming the polyurethane polyol because the effects of the present invention can be further expressed.

Any appropriate polyether polyol may be used as the polyether polyol (a2). Such polyether polyol (a2) is, for example, a polyether polyol obtained by polymerizing an oxirane compound, such as ethylene oxide, propylene oxide, butylene oxide, or tetrahydrofuran, through use of water or a low-molecular weight polyol, such as propylene glycol, ethylene glycol, glycerin, or trimethylolpropane, as an initiator. Such polyether polyol (a2) is specifically, for example, a polyether polyol having 2 or more functional groups, such as polypropylene glycol, polyethylene glycol, or polytetramethylene glycol.

Any value in the range of from a low molecular weight to a high molecular weight may be used as the molecular weight of the polyether polyol (a2). The molecular weight of the polyether polyol (a2) is preferably from 100 to 100,000 in terms of number-average molecular weight because the effects of the present invention can be further expressed. When the number-average molecular weight is less than 100, there is a risk in that the reactivity of the polyol becomes higher, and hence the polyol is liable to gel. When the number-average molecular weight is more than 100,000, there is a risk in that the reactivity reduces, and the cohesive strength of the polyurethane polyol itself reduces. The usage amount of the polyether polyol (a2) is preferably from 0 mol% to 90 mol% in the polyols for forming the polyurethane polyol because the effects of the present invention can be further expressed.

A product obtained by substituting part of the polyether polyol (a2) with, for example, a glycol, such as ethylene glycol, 1,4-butanediol, neopentyl glycol, butylethylpentanediol, glycerin, trimethylolpropane, or pentaerythritol, or a polyvalent amine, such as ethylenediamine, N-aminoethylethanolamine, isophoronediamine, or xylylenediamine, as required may be used in combination.

Only a bifunctional polyether polyol may be used as the polyether polyol (a2), or a polyether polyol having a number-average molecular weight of from 100 to 100,000 and having at least 3 hydroxy groups in a molecule thereof may be partially or wholly used. When the polyether polyol having a number-average molecular weight of from 100 to 100,000 and having at least 3 hydroxy groups in a molecule thereof is partially or wholly used as the polyether polyol (a2), the effects of the present invention can be further expressed, and a balance between the pressure-sensitive adhesive strength and peelability of the pressure-sensitive adhesive layer can become satisfactory. When the number-average molecular weight in such polyether polyol is less than 100, there is a risk in that its reactivity becomes higher, and hence the polyol is liable to gel. In addition, when the number-average molecular weight in such polyether polyol is more than 100,000, there is a risk in that the reactivity reduces, and the cohesive strength of the polyurethane polyol itself reduces. The number-average molecular weight of such polyether polyol is more preferably from 100 to 10,000 because the effects of the present invention can be further expressed.

Any appropriate organic polyisocyanate compound may be used as the organic polyisocyanate compound (a3). Examples of such organic polyisocyanate compound (a3) include an aromatic polyisocyanate, an aliphatic polyisocyanate, an aromatic aliphatic polyisocyanate, and an alicyclic polyisocyanate.

Examples of the aromatic polyisocyanate include 1,3-phenylene diisocyanate, 4,4'-diphenyl diisocyanate, 1,4-phenylene diisocyanate, 4,4'-diphenylmethane diisocyanate, 2,4-tolylene diisocyanate, 2,6-tolylene diisocyanate, 4,4'-toluidine diisocyanate, 2,4,6-triisocyanatotoluene, 1,3,5-triisocyanatobenzene, dianisidine diisocyanate, 4,4'-diphenyl ether diisocyanate, and 4,4',4"-triphenylmethane triisocyanate.

Examples of the aliphatic polyisocyanate include trimethylene diisocyanate, tetramethylene diisocyanate, hexamethylene diisocyanate, pentamethylene diisocyanate, 1,2-propylene diisocyanate, 2,3-butylene diisocyanate, 1,3-butylene diisocyanate, dodecamethylene diisocyanate, and 2,4,4-trimethylhexamethylene diisocyanate.

Examples of the aromatic aliphatic polyisocyanate include ω,ω'-diisocyanato-1,3-dimethylbenzene, ω,ω'-diisocyanato-1,4-dimethylbenzene, ω,ω'-diisocyanato-1,4-diethylbenzene, 1,4-tetramethylxylylene diisocyanate, and 1,3-tetramethylxylylene diisocyanate.

Examples of the alicyclic polyisocyanate include 3-isocyanatomethyl-3,5,5-trimethylcyclohexyl isocyanate, 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebis(cyclohexyl isocyanate), 1,4-bis(isocyanatomethyl)cyclohexane, and 1,4-bis(isocyanatomethyl)cyclohexane.

A trimethylolpropane adduct of any such compound as described above, a biuret thereof formed by a reaction with water, a trimer thereof having an isocyanurate ring, or the like may be used as the organic polyisocyanate compound (a3) in combination with the above-mentioned compound.

Any appropriate catalyst may be used as a catalyst that may be used in obtaining the polyurethane polyol. Examples of such catalyst include a tertiary amine-based compound and an organometallic compound.

Examples of the tertiary amine-based compound include triethylamine, triethylenediamine, and 1,8-diazabicyclo(5,4,0)-undecene-7 (DBU).

Examples of the organometallic compound include a tin-based compound and a non-tin-based compound.

Examples of the tin-based compound include dibutyltin dichloride, dibutyltin oxide, dibutyltin dibromide, dibutyltin dimaleate, dibutyltin dilaurate (DBTDL), dibutyltin diacetate, dibutyltin sulfide, tributyltin sulfide, tributyltin oxide, tributyltin acetate, triethyltin ethoxide, tributyltin ethoxide, dioctyltin oxide, tributyltin chloride, tributyltin trichloroacetate, and tin 2-ethylhexanoate.

Examples of the non-tin-based compound include: titanium-based compounds, such as dibutyltitanium dichloride, tetrabutyl titanate, and butoxytitanium trichloride; lead-based compounds, such as lead oleate, lead 2-ethylhexanoate, lead benzoate, and lead naphthenate; iron-based compounds, such as iron 2-ethylhexanoate and iron acetylacetonate; cobalt-based compounds, such as cobalt benzoate and cobalt 2-ethylhexanoate; zinc-based compounds, such as zinc naphthenate and zinc 2-ethylhexanoate; and zirconium-based compounds such as zirconium naphthenate.

When the catalyst is used in obtaining the polyurethane polyol, in a system where the two kinds of polyols, that is, the polyester polyol and the polyether polyol are present, a single catalyst system is liable to cause a problem in that the polyols gel or a reaction solution becomes cloudy owing to a difference in reactivity between the polyols. In view of the foregoing, when two kinds of catalysts are used in obtaining the polyurethane polyol, it becomes easier to control a reaction rate, the selectivity of the catalysts, and the like, and hence such problem can be solved. Examples of the combination of such two kinds of catalysts include: the combination of a tertiary amine-based compound and an organometallic compound; the combination of a tin-based compound and a non-tin-based compound; and the combination of a tin-based compound and another tin-based compound. Of those, the combination of a tin-based compound and another tin-based compound is preferred, and the combination of dibutyltin dilaurate and tin 2-ethylhexanoate is more

preferred. A blending ratio "tin 2-ethylhexanoate/dibutyltin dilaurate" is preferably less than 1, more preferably from 0.2 to 0.6 in terms of weight ratio. When the blending ratio is 1 or more, the polyols may be liable to gel owing to a poor balance between the catalytic activities of the catalysts.

When the catalyst is used in obtaining the polyurethane polyol, the usage amount of the catalyst is preferably from 0.01 wt% to 1.0 wt% with respect to the total amount of the polyester polyol (a1), the polyether polyol (a2), and the organic polyisocyanate compound (a3).

When the catalyst is used in obtaining the polyurethane polyol, a reaction temperature is preferably less than 100°C, more preferably from 85°C to 95°C. When the temperature is 100°C or more, it may be difficult to control the reaction rate and the cross-linked structure of the polyurethane polyol, and hence a polyurethane polyol having a predetermined molecular weight may be hardly obtained.

No catalyst may be used in obtaining the polyurethane polyol. In that case, the reaction temperature is preferably 100°C or more, more preferably 110°C or more. In addition, when the polyurethane polyol is obtained in the absence of any catalyst, the polyols (a1) and (a2), and the compound (a3) are preferably allowed to react with each other for 3 hours or more.

A method of obtaining the polyurethane polyol is, for example, (1) a method involving loading the total amount of the polyester polyol, the polyether polyol, the catalyst, and the organic polyisocyanate compound into a flask, or (2) a method involving loading the polyester polyol, the polyether polyol, and the catalyst into a flask, and adding the organic polyisocyanate compound to the mixture. Of those, the method (2) is preferred as a method of obtaining the polyurethane polyol in terms of the control of the reaction.

Any appropriate solvent may be used in obtaining the polyurethane polyol. Examples of such solvent include methyl ethyl ketone, ethyl acetate, toluene, xylene, and acetone. Of those solvents, toluene is preferred.

[Polyol]

Preferred examples of the polyol include polyester polyol, polyether polyol, polycaprolactone polyol, polycarbonate polyol, and castor oil-based polyol. The polyol is more preferably polyether polyol.

The polyester polyol may be obtained through, for example, an esterification reaction between a polyol component and an acid component.

Examples of the polyol component include ethylene glycol, diethylene glycol, 1,3-butanediol, 1,4-butanediol, neopentyl glycol, 3-methyl-1,5-pentanediol, 2-butyl-2-ethyl-1,3-propanediol, 2,4-diethyl-1,5-pentanediol, 1,2-hexanediol, 1,6-hexanediol, 1,8-octanediol, 1,9-nonanediol, 2-methyl-1,8-octanediol, 1,8-decanediol, octadecanediol, glycerin, trimethylolpropane, pentaerythritol, hexanetriol, and polypropylene glycol. Examples of the acid component include succinic acid, methylsuccinic acid, adipic acid, pimelicacid, azelaicacid, sebacicacid, 1,12-dodecanedioic acid, 1,14-tetradecanedioic acid, dimer acid, 2-methyl-1,4-cyclohexanedicarboxylic acid, 2-ethyl-1,4-cyclohexanedicarboxylic acid, terephthalic acid, isophthalic acid, phthalic acid, 1,4-naphthalenedicarboxylic acid, 4,4'-biphenyldicarboxylic acid, and acid anhydrides thereof.

An example of the polyether polyol is a polyether polyol obtained by subjecting water, a low-molecular polyol (e.g., propylene glycol, ethylene glycol, glycerin, trimethylolpropane, or pentaerythritol), a bisphenol (e.g., bisphenol A), or a dihydroxybenzene (e.g., catechol, resorcin, or hydroquinone) serving as an initiator to addition polymerization with an alkylene oxide, such as ethylene oxide, propylene oxide, or butylene oxide. Specific examples thereof include polyethylene glycol, polypropylene glycol, and polytetramethylene glycol.

An example of the polycaprolactone polyol is a caprolactone-based polyester diol obtained by subjecting a cyclic ester monomer, such as ε-caprolactone or σ-valerolactone, to ring-opening polymerization.

Examples of the polycarbonate polyol include: a polycarbonate polyol obtained by subjecting the polyol component and phosgene to a polycondensation reaction; a polycarbonate polyol obtained by subjecting the polyol component and a carbonate diester, such as dimethyl carbonate, diethyl carbonate, dipropyl carbonate, diisopropyl carbonate, dibutyl carbonate, ethylbutyl carbonate, ethylene carbonate, propylene carbonate, diphenyl carbonate, or dibenzyl carbonate, to transesterification condensation; a copolymerized polycarbonate polyol obtained by using two or more kinds of the polyol components in combination; a polycarbonate polyol obtained by subjecting any of the various polycarbonate polyols and a carboxyl group-containing compound to an esterification reaction; a polycarbonate polyol obtained by subjecting any of the various polycarbonate polyols and a hydroxyl group-containing compound to an etherification reaction; a polycarbonate polyol obtained by subjecting any of the various polycarbonate polyols and an ester compound to a transesterification reaction; a polycarbonate polyol obtained by subjecting any of the various polycarbonate polyols and a hydroxyl group-containing compound to a transesterification reaction; a polyester-based polycarbonate polyol obtained by subjecting any of the various polycarbonate polyols and a dicarboxylic acid compound to a polycondensation reaction; and a copolymerized polyether-based polycarbonate polyol obtained by subjecting any of the various polycarbonate polyols and an alkylene oxide to copolymerization.

An example of the castor oil-based polyol is a castor oil-based polyol obtained by allowing a castor oil fatty acid

and the polyol component to react with each other. A specific example thereof is a castor oil-based polyol obtained by allowing a castor oil fatty acid and polypropylene glycol to react with each other.

The number-average molecular weight Mn of the polyols is preferably from 300 to 100,000, more preferably from 400 to 75,000, still more preferably from 450 to 50,000, particularly preferably from 500 to 30,000 because the effects of the present invention can be further expressed.

The polyols preferably contain a polyol (A1) having 3 OH groups and having a number-average molecular weight Mn of from 300 to 100,000 because the effects of the present invention can be further expressed. The number of kinds of the polyols (A1) may be only one, or two or more.

The content of the polyol (A1) in the polyols is preferably 5 wt% or more, more preferably from 25 wt% to 100 wt%, still more preferably from 50 wt% to 100 wt% because the effects of the present invention can be further expressed.

The number-average molecular weight Mn of the polyol (A1) is preferably from 1,000 to 100,000, more preferably more than 1,000 and 80,000 or less, still more preferably from 1,100 to 70,000, still more preferably from 1,200 to 60,000, still more preferably from 1,300 to 50,000, still more preferably from 1,400 to 40,000, still more preferably from 1,500 to 35,000, particularly preferably from 1,700 to 32,000, most preferably from 2,000 to 30,000 because the effects of the present invention can be further expressed.

The polyols may contain a polyol (A2) having 3 or more OH groups and having a number-average molecular weight Mn of 20,000 or less. The number of kinds of the polyols (A2) may be only one, or two or more. The number-average molecular weight Mn of the polyol (A2) is preferably from 100 to 20,000, more preferably from 150 to 10,000, still more preferably from 200 to 7,500, particularly preferably from 300 to 6,000, most preferably from 300 to 5,000 because the effects of the present invention can be further expressed. Preferred examples of the polyol (A2) include a polyol having 3 OH groups (triol), a polyol having 4 OH groups (tetraol), a polyol having 5 OH groups (pentaol), and a polyol having 6 OH groups (hexaol) because the effects of the present invention can be further expressed.

The total amount of the polyol having 4 OH groups (tetraol), the polyol having 5 OH groups (pentaol), and the polyol having 6 OH groups (hexaol) each serving as the polyol (A2) is preferably 70 wt% or less, more preferably 60 wt% or less, still more preferably 40 wt% or less, particularly preferably 30 wt% or less in terms of content in the polyols because the effects of the present invention can be further expressed.

The content of the polyol (A2) in the polyols is preferably 95 wt% or less, more preferably from 0 wt% to 75 wt% because the effects of the present invention can be further expressed.

The content of a polyol having 4 or more OH groups and having a number-average molecular weight Mn of 20,000 or less serving as the polyol (A2) is preferably less than 70 wt%, more preferably 60 wt% or less, still more preferably 50 wt% or less, particularly preferably 40 wt% or less, most preferably 30 wt% or less with respect to the entirety of the polyols because the effects of the present invention can be further expressed.

[Cross-linking Agent]

The urethane-based pressure-sensitive adhesive composition preferably contains a cross-linking agent because the effects of the present invention can be further expressed.

The urethane prepolymer and the polyol serving as base polymers may each be a component for the urethane-based pressure-sensitive adhesive composition when combined with the cross-linking agent.

The cross-linking agent to be combined with the urethane prepolymer and the polyol serving as base polymers is preferably a polyfunctional isocyanate-based cross-linking agent because the effects of the present invention can be further expressed.

Any appropriate polyfunctional isocyanate-based cross-linking agent that may be used for a urethanization reaction may be adopted as the polyfunctional isocyanate-based cross-linking agent. Examples of such polyfunctional isocyanate-based cross-linking agent include the polyfunctional isocyanate-based cross-linking agents described above in <Acrylic Pressure-sensitive Adhesive>.

[Urethane-based Pressure-sensitive Adhesive Composition]

The urethane-based pressure-sensitive adhesive composition may contain any appropriate other component to the extent that the effects of the present invention are not impaired. Examples of such other component include a polymer component except the urethane prepolymer and the polyol, a cross-linking accelerator, a cross-linking catalyst, a silane coupling agent, a tackifier resin (e.g., a rosin derivative, a polyterpene resin, a petroleum resin, or an oil-soluble phenol), an age resistor, an inorganic filler, an organic filler, a metal powder, a colorant (e.g., a pigment or a dye), a foil-like material, a deterioration-preventing agent, a chain transfer agent, a plasticizer, a softening agent, a surfactant, an antistatic agent, a conductive agent, a stabilizer, a surface lubricant, a leveling agent, a corrosion inhibitor, a heat stabilizer, a polymerization inhibitor, a lubricant, a solvent, and a catalyst.

The urethane-based pressure-sensitive adhesive composition preferably contains a deterioration-preventing

agent because the effects of the present invention can be further expressed. The number of kinds of the deterioration-preventing agents may be only one, or two or more.

Preferred examples of the deterioration-preventing agent include an antioxidant, a UV absorber, and a light stabilizer because the effects of the present invention can be further expressed.

Examples of the antioxidant include a radical chain inhibitor and a peroxide decomposer.

Examples of the radical chain inhibitor include a phenol-based antioxidant and an amine-based antioxidant.

Examples of the phenol-based antioxidant include a monophenol-based antioxidant, a bisphenol-based antioxidant, and a polymer-type phenol-based antioxidant. Examples of the monophenol-based antioxidant include 2,6-di-t-butyl-p-cresol, butylated hydroxyanisole, 2,6-di-t-butyl-4-ethylphenol, and stearin-β-(3,5-di-t-butyl-4-hydroxyphenyl)propionate. Examples of the bisphenol-based antioxidant include 2,2'-methylenebis(4-methyl-6-t-butylphenol), 2,2'-methylenebis(4-ethyl-6-t-butylphenol), 4,4'-thiobis(3-methyl-6-t-butylphenol), 4,4'-butylidenebis(3-methyl-6-t-butylphenol), and 3,9-bis[1,1-dimethyl-2-[β-(3-t-butyl-4-hydroxy-5-methylphenyl)propionyloxy]ethyl]2,4,8,10-tetraoxaspiro[5,5]undecane. Examples of the polymer-type phenol-based antioxidant include 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis-[methylene-3-(3',5'-di-t-butyl-4'-hydroxyphenyl)propionate]methane, bis[3,3'-bis-(4'-hydroxy-3'-t-butylphenyl)butyric acid] glycol ester, 1,3,5-tris(3',5'-di-t-butyl-4'-hydroxybenzyl)-S-triazine-2,4,6-(1H,3H,5H)trione, and tocopherol.

Examples of the peroxide decomposer include a sulfur-based antioxidant and a phosphorus-based antioxidant. Examples of the sulfur-based antioxidant include dilauryl 3,3'-thiodipropionate, dimyristyl 3,3'-thiodipropionate, and distearyl 3,3'-thiodipropionate. Examples of the phosphorus-based antioxidant include triphenyl phosphite, diphenyl isodecyl phosphite, and phenyl diisodecyl phosphite.

Examples of the UV absorber include a benzophenone-based UV absorber, a benzotriazole-based UV absorber, a salicylic acid-based UV absorber, an oxanilide-based UV absorber, a cyanoacrylate-based UV absorber, and a triazine-based UV absorber.

Examples of the benzophenone-based UV absorber include 2,4-dihydroxybenzophenone, 2-hydroxy-4-methoxybenzophenone, 2-hydroxy-4-octoxybenzophenone, 2-hydroxy-4-dodecyloxybenzophenone, 2,2'-dihydroxy-4-dimethoxybenzophenone, 2,2'-dihydroxy-4,4'-dimethoxybenzophenone, 2-hydroxy-4-methoxy-5-sulfobenzophenone, and bis(2-methoxy-4-hydroxy-5-benzoylphenyl)methane.

Examples of the benzotriazole-based UV absorber include 2-(2'-hydroxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-3',5'-di-tert-amylphenyl)benzotriazole, 2-(2'-hydroxy-4'-octoxyphenyl)benzotriazole, 2-[2'-hydroxy-3'-(3",4",5",6",-tetrahydrophthalimidomethyl)-5'-methylphenyl]benzotriazole, 2,2'-methylenebis[4-(1,1,3,3-tetramethylbutyl)-6-(2H-benzotriazol-2-yl)phenol], and 2-(2'-hydroxy-5'-methacryloxyphenyl)-2H-benzotriazole.

Examples of the salicylic acid-based UV absorber include phenyl salicylate, p-tert-butylphenyl salicylate, and p-octylphenyl salicylate.

Examples of the cyanoacrylate-based UV absorber include 2-ethylhexyl-2-cyano-3,3'-diphenyl acrylate, and ethyl-2-cyano-3,3'-diphenyl acrylate.

Examples of the light stabilizer include a hindered amine-based light stabilizer and a UV stabilizer. Examples of the hindered amine-based light stabilizer include bis(2,2,6,6-tetramethyl-4-piperidyl) sebacate, bis(1,2,2,6,6-pentamethyl-4-piperidyl) sebacate, and methyl-1,2,2,6,6-pentamethyl-4-piperidyl sebacate. Examples of the UV stabilizer include nickel bis(octylphenyl) sulfide, [2,2'-thiobis(4-tert-octylphenolate)]-n-butylamine nickel, nickel complex-3,5-di-tert-butyl-4-hydroxybenzyl-phosphoric acid monoethylate, a benzoate-type quencher, and nickel-dibutyl dithiocarbamate.

[Urethane-based Polymer formed from Urethane-based Pressure-sensitive Adhesive Composition containing Urethane Prepolymer and Polyfunctional Isocyanate-based Cross-linking Agent]

The number of kinds of the urethane prepolymers may be only one, or two or more. The number of kinds of the polyfunctional isocyanate-based cross-linking agents may be only one, or two or more.

Any appropriate production method may be adopted as a method of forming the urethane-based polymer from the urethane-based pressure-sensitive adhesive composition containing the urethane prepolymer and the polyfunctional isocyanate-based cross-linking agent as long as the production method is a method of producing a urethane-based polymer through use of a so-called "urethane prepolymer" as a raw material.

The number-average molecular weight Mn of the urethane prepolymer is preferably from 3,000 to 1,000,000 because the effects of the present invention can be further expressed.

An equivalent ratio "NCO group/OH group" between an NCO group and a OH group in the urethane prepolymer and the polyfunctional isocyanate-based cross-linking agent is preferably 5.0 or less, more preferably from 0.01 to 4.75, still more preferably from 0.02 to 4.5, particularly preferably from 0.03 to 4.25, most preferably from 0.05 to 4.0 because the effects of the present invention can be further expressed.

The content of the polyfunctional isocyanate-based cross-linking agent is preferably from 0.01 part by weight to 30 parts by weight, more preferably from 0.05 part by weight to 25 parts by weight, still more preferably from 0.1 part by weight to 20 parts by weight, particularly preferably from 0.5 part by weight to 17.5 parts by weight, most preferably from 1 part by weight to 15 parts by weight with respect to 100 parts by weight of the urethane prepolymer because the effects of the present invention can be further expressed.

[Urethane-based Polymer formed from Urethane-based Pressure-sensitive Adhesive Composition containing Polyol and Polyfunctional Isocyanate-based Cross-linking Agent]

The number of kinds of the polyols may be only one, or two or more. The number of kinds of the polyfunctional isocyanate-based cross-linking agents may be only one, or two or more.

An equivalent ratio "NCO group/OH group" between an NCO group and a OH group in the polyol and the polyfunctional isocyanate-based cross-linking agent is preferably 5.0 or less, more preferably from 0.1 to 3.0, still more preferably from 0.2 to 2.5, particularly preferably from 0.3 to 2.25, most preferably from 0.5 to 2.0 because the effects of the present invention can be further expressed.

The content of the polyfunctional isocyanate-based cross-linking agent is preferably from 1.0 part by weight to 30 parts by weight, more preferably from 1.5 parts by weight to 27 parts by weight, still more preferably from 2.0 parts by weight to 25 parts by weight, particularly preferably from 2.3 parts by weight to 23 parts by weight, most preferably from 2.5 parts by weight to 20 parts by weight with respect to 100 parts by weight of the polyol because the effects of the present invention can be further expressed.

Specifically, the urethane-based polymer formed from the urethane-based pressure-sensitive adhesive composition containing the polyol and the polyfunctional isocyanate-based cross-linking agent is preferably formed by curing the urethane-based pressure-sensitive adhesive composition containing the polyol and the polyfunctional isocyanate-based cross-linking agent. As a method of forming the urethane-based polymer by curing the urethane-based pressure-sensitive adhesive composition containing the polyol and the polyfunctional isocyanate-based cross-linking agent, there may be adopted any appropriate method such as a urethanization reaction method making use of, for example, bulk polymerization or solution polymerization to the extent that the effects of the present invention are not impaired.

A catalyst is preferably used for curing the urethane-based pressure-sensitive adhesive composition containing the polyol and the polyfunctional isocyanate-based cross-linking agent. Examples of such catalyst include an organometallic compound and a tertiary amine compound.

Examples of the organometallic compound may include an iron-based compound, a tin-based compound, a titanium-based compound, a zirconium-based compound, a lead-based compound, a cobalt-based compound, and a zinc-based compound. Of those, an iron-based compound and a tin-based compound are preferred from the viewpoints of a reaction rate and the pot life of the pressure-sensitive adhesive layer.

Examples of the iron-based compound include iron acetylacetonate, iron 2-ethylhexanoate, and Nacem Ferric Iron.

Examples of the tin-based compound include dibutyltin dichloride, dibutyltin oxide, dibutyltin dibromide, dibutyltin maleate, dibutyltin dilaurate, dibutyltin diacetate, dibutyltin sulfide, tributyltin methoxide, tributyltin acetate, triethyltin ethoxide, tributyltin ethoxide, dioctyltin oxide, dioctyltin dilaurate, tributyltin chloride, tributyltin trichloroacetate, and tin 2-ethylhexanoate.

Examples of the titanium-based compound include dibutyltitanium dichloride, tetrabutyl titanate, and butoxytitanium trichloride.

Examples of the zirconium-based compound include zirconium naphthenate and zirconium acetylacetonate.

Examples of the lead-based compound include lead oleate, lead 2-ethylhexanoate, lead benzoate, and lead naphthenate.

Examples of the cobalt-based compound include cobalt 2-ethylhexanoate and cobalt benzoate.

Examples of the zinc-based compound include zinc naphthenate and zinc 2-ethylhexanoate.

Examples of the tertiary amine compound include triethylamine, triethylenediamine, and 1,8-diazabicyclo-(5,4,0)-undecene-7.

The number of kinds of the catalysts may be only one, or two or more. In addition, the catalyst may be used in combination with, for example, a cross-linking retarder. The amount of the catalyst is preferably from 0.005 part by weight to 1.00 part by weight, more preferably from 0.01 part by weight to 0.75 part by weight, still more preferably from 0.01 part by weight to 0.50 part by weight, particularly preferably from 0.01 part by weight to 0.20 part by weight with respect to 100 parts by weight of the polyol because the effects of the present invention can be further expressed.

«1-2. Pressure-sensitive Adhesive Treatment Liquid»

The pressure-sensitive adhesive treatment liquid used in an embodiment of the present invention contains a

liquid having a Hansen solubility parameter value of 31 or less, and an alkaline compound, and the concentration of the alkaline compound is from 0.001 wt% to 20 wt%.

The term "liquid" as used in the present invention refers to a product that is a liquid at normal temperature and normal pressure, and general examples thereof include water, an alcohol, and other various solvents.

The number of kinds of the liquids each having a Hansen solubility parameter value of 31 or less in the pressure-sensitive adhesive treatment liquid may be only one, or two or more.

The number of kinds of the alkaline compounds in the pressure-sensitive adhesive treatment liquid may be only one, or two or more.

When the pressure-sensitive adhesive treatment liquid contains the liquid having a Hansen solubility parameter value of 31 or less, and the alkaline compound, and the concentration of the alkaline compound is from 0.01 wt% to 10 wt%, the water-soluble polymer can be smoothly produced from the pressure-sensitive adhesive under a mild condition.

The "Hansen solubility parameter value" refers to a parameter value obtained by dividing a Hildebrand solubility parameter value into three components, that is, a dispersion term ($\delta_D$), a polar term ($\delta_P$), and a hydrogen bond term ($\delta_H$), and considering the polarity of a substance, and may be abbreviated as "HSP value." The dispersion term (a term concerning a van der Waals force), the polar term (a term concerning a dipole moment), and the hydrogen bond term (a term concerning a hydrogen bond) may be represented with three-dimensional coordinates.

The Hansen solubility parameter value of a mixed liquid of two or more kinds of liquids may be determined from the following equation (1) as the weighted average "m" of the HSP values of the respective solvents. δ1 and δ2 represent the HSP values of the respective liquid components, and φ1 and φ2 represent the volume fractions of the respective liquid components.

$$m=\delta 1\varphi 1+\delta 2\varphi 2\cdots(1)$$

The Hansen solubility parameter values of the respective solvents are recorded in "HSPiP version 5," and a value estimated from "HSPiP version 5" is used for a solvent that is not recorded therein.

The Hansen solubility parameter value of the liquid contained in the pressure-sensitive adhesive treatment liquid is 31 or less, preferably 30 or less, more preferably 29 or less, still more preferably 28 or less, and particularly preferably 25 or less. The lower limit value of the Hansen solubility parameter value of the liquid contained in the pressure-sensitive adhesive treatment liquid is preferably 7 or more, more preferably 10 or more, still more preferably 13 or more, and particularly preferably 15 or more. When the Hansen solubility parameter value of the liquid contained in the pressure-sensitive adhesive treatment liquid falls within the above-described range so as to be preferably 10 or more and 30 or less and more preferably 15 or more and 25 or less, the water-soluble polymer can be stably produced from the pressure-sensitive adhesive under a mild condition.

If the Hansen solubility parameter value of the liquid contained in the pressure-sensitive adhesive treatment liquid is more than 31, permeability of the pressure-sensitive adhesive treatment liquid into the pressure-sensitive adhesive may deteriorate, and efficiency for producing the water-soluble polymer may be reduced. If the Hansen solubility parameter value of the liquid contained in the pressure-sensitive adhesive treatment liquid is less than 7, permeability of the pressure-sensitive adhesive treatment liquid into the pressure-sensitive adhesive may similarly deteriorate although the degree of the deterioration is smaller as compared with a case where the Hansen solubility parameter value is more than 31, and efficiency for producing the water-soluble polymer may be reduced.

Typical examples of the liquid that is contained in the pressure-sensitive adhesive treatment liquid and has the Hansen solubility parameter value of 31 or less as a single liquid include the following liquids.

Alcohols: methanol (HSP value=29.6), ethanol (HSP value=26.5), 1-propanol (HSP value=24.6), 2-propanol (IPA) (HSP value=23.6), 1-butanol (HSP value=23.2), 1-pentanol (HSP value=21.7), 1-hexanol (HSP value=21.2), benzyl alcohol (HSP value=23.8), diethylene glycol (HSP value=27.9), dipropylene glycol (HSP value=26.4)
Hydrocarbons: benzene (HSP value=18.5), toluene (HSP value=18.2), styrene (HSP value=19.1), hexane (HSP value=14.9), cyclohexane (HSP value=16.8), heptane (HSP value=15.3)
Ketones: acetone (HSP value=19.9), methyl ethyl ketone (HSP value=19.1)
Esters: ethyl acetate (HSP value=18.2)
Ethers: tetrahydrofuran (HSP value=19.5), cyclopentyl methyl ether (HSP value=17.8)
Amines: aniline (HSP value=23.7)
Nitriles: acetonitrile (HSP value=24.4)
Carboxylic acids: acetic acid (HSP value=21.4)
Terpenes: d-limonene (HSP value=17.8)

One kind of these liquids may be used alone or two or more kinds thereof may be used in combination. In

addition to the liquid having a Hansen solubility parameter of 31 or less as a single liquid, a mixed liquid obtained by combining a plurality of liquids may be used as long as m in formula (1) as the Hansen solubility parameter value of the mixed liquid is 31 or less. A solvent that may be used in the mixed liquid obtained by combining a plurality of liquids is, for example, water (HSP value=47.8). For example, a liquid obtained by mixing water (HSP value=47.8) and ethanol (HSP value=26.5) at a ratio of water/ethanol=20%/80% in terms of volume fraction may be used because m=30.76 is satisfied.

The liquid having the Hansen solubility parameter value of 31 or less preferably contains an alcohol and more preferably contains a lower alcohol from the viewpoint of, for example, solubility of the alkaline compound. Examples of the lower alcohol include not only primary alcohols but also secondary alcohols, such as 2-propanol, propylene glycol monopropyl ether, and propylene glycol monoethyl ether, and tertiary alcohols such as t-butyl alcohol.

Examples of the lower alcohol preferably include lower alcohols (typically, at least one selected from methanol, ethanol, 1-propanol, 2-propanol, butanol, and 1-pentanol) having 1 to 5 carbon atoms, more preferably include lower alcohols (typically, at least one selected from methanol, ethanol, 1-propanol, 2-propanol, and butanol) having 1 to 4 carbon atoms, still more preferably include lower alcohols (typically, at least one selected from methanol, ethanol, 1-propanol, and 2-propanol) having 1 to 3 carbon atoms, and particularly preferably include lower alcohols (at least one selected from methanol and ethanol) having 1 to 2 carbon atoms.

The liquid having the Hansen solubility parameter value of 31 or less preferably includes, in addition to alcohols, organic solvents other than alcohols. One kind of an organic solvent other than alcohols may be used alone, or two or more kinds of organic solvents other than alcohols may be used in combination. Examples of the organic solvent other than alcohols include the above-described ethers and the above-described hydrocarbons, and the organic solvent is preferably at least one selected from toluene, cyclopentyl methyl ether, and tetrahydrofuran, and more preferably at least one selected from toluene and cyclopentyl methyl ether. When the liquid having the Hansen solubility parameter value of 31 or less is a mixed solvent of the alcohol and the organic solvent (preferably, at least one kind selected from the ethers and the hydrocarbons), permeability of the pressure-sensitive adhesive treatment liquid into the pressure-sensitive adhesive can be enhanced, and efficiency for producing the water-soluble polymer can be enhanced.

In a case where the liquid having the Hansen solubility parameter value of 31 or less contains the alcohol and the organic solvent (preferably at least one kind selected from the ethers and the hydrocarbons) other than alcohols, a volume ratio (organic solvent alcohol) between the organic solvent and the alcohol is preferably 10:90 to 99:1, more preferably 20:80 to 95:5, still more preferably 30:70 to 90:10, particularly preferably 40:60 to 90:10, and most preferably 60:40 to 80:20. When the volume ratio between the organic solvent and the alcohol falls within the above-described range, permeability of the pressure-sensitive adhesive treatment liquid into the pressure-sensitive adhesive can be further enhanced, and efficiency for producing the water-soluble polymer can be stably enhanced.

As the alkaline compound contained in the pressure-sensitive adhesive treatment liquid, any appropriate alkaline compound can be adopted to the extent that the effects of the present invention are not impaired. Examples of such alkaline compound include: hydroxides or carbonates of alkali metals or alkaline earth metals, such as potassium hydroxide, sodium hydroxide, and calcium hydroxide; and metal alkoxides, such as sodium methoxide, sodium ethoxide, and potassium t-butoxide. The alkaline compound is preferably at least one selected from the group consisting of potassium hydroxide, sodium hydroxide, and sodium ethoxide.

The concentration of the alkaline compound in the pressure-sensitive adhesive treatment liquid is preferably from 0.001 wt% to 20 wt%, more preferably from 0.01 wt% to 10 wt%, still more preferably from 0.01 wt% to 8 wt%, particularly preferably from 0.01 wt% to 5 wt%, and most preferably from 0.5 wt% to 1.5 wt%. When the concentration of the alkaline compound in the pressure-sensitive adhesive treatment liquid falls within the above-described range, the water-soluble polymer can be more stably produced from the pressure-sensitive adhesive under a mild condition. If the concentration of the alkaline compound in the pressure-sensitive adhesive treatment liquid is more than 20 wt%, the alkaline compound is not easily dissolved in a treatment solvent (liquid having the Hansen solubility parameter value of 31 or less), and a base material as well as the pressure-sensitive adhesive may be negatively affected in the form of the pressure-sensitive adhesive tape.

The pressure-sensitive adhesive treatment liquid may contain another additive. As the other additive, any appropriate additive can be adopted to the extent that the effects of the present invention are not impaired. Examples of such additive include various known additives, such as an ionic surfactant, a nonionic surfactant, a chelating agent, a solubilizing agent, a slurrying agent, and an antifoaming agent.

«1-3. Pressure-sensitive Adhesive Processing step»

The method for producing a water-soluble polymer according to the embodiment of the present invention typically includes impregnating the above-described pressure-sensitive adhesive with the above-described pressure-sensitive adhesive treatment liquid. Thus, the water-soluble polymer can be smoothly produced from the pressure-sensitive adhesive under a mild condition.

Any appropriate impregnation method may be appropriately adopted as a method of impregnating the pressure-sensitive adhesive with the pressure-sensitive adhesive treatment liquid in accordance with the scale of the impregnation and the kind of the pressure-sensitive adhesive. The phrase "impregnating the pressure-sensitive adhesive with the pressure-sensitive adhesive treatment liquid" as used herein refers to the establishment of such a state that the pressure-sensitive adhesive is impregnated with the pressure-sensitive adhesive treatment liquid, and refers to, for example, the establishment of a state in which at least part of the pressure-sensitive adhesive is immersed in the pressure-sensitive adhesive treatment liquid. The state in which at least part of the pressure-sensitive adhesive is immersed in the pressure-sensitive adhesive treatment liquid is preferred because the pressure-sensitive adhesive treatment liquid permeates the pressure-sensitive adhesive.

In the method for producing a water-soluble polymer according to the embodiment of the present invention, one preferred embodiment is as follows: stirring is performed under a state in which the pressure-sensitive adhesive is impregnated with the pressure-sensitive adhesive treatment liquid. When the stirring is performed under the state in which the pressure-sensitive adhesive is impregnated with the pressure-sensitive adhesive treatment liquid, the water-soluble polymer can be more smoothly produced from the pressure-sensitive adhesive. The term "state in which the pressure-sensitive adhesive is impregnated with the pressure-sensitive adhesive treatment liquid" as used herein refers to such a state that the pressure-sensitive adhesive is impregnated with the pressure-sensitive adhesive treatment liquid, and refers to, for example, a state in which at least part of the pressure-sensitive adhesive is immersed in the pressure-sensitive adhesive treatment liquid. The state in which at least part of the pressure-sensitive adhesive is immersed in the pressure-sensitive adhesive treatment liquid is preferred because the pressure-sensitive adhesive treatment liquid permeates the pressure-sensitive adhesive.

Any appropriate stirring method may be appropriately adopted as a method for the stirring in accordance with the scale of the stirring and the kind of the pressure-sensitive adhesive.

In the pressure-sensitive adhesive processing method according to the embodiment of the present invention, one preferred embodiment is as follows: ultrasonic treatment is performed under a state in which the pressure-sensitive adhesive is impregnated with the pressure-sensitive adhesive treatment liquid. When the ultrasonic treatment is performed under the state in which the pressure-sensitive adhesive is impregnated with the pressure-sensitive adhesive treatment liquid, the water-soluble polymer can be more smoothly produced from the pressure-sensitive adhesive.

Any appropriate ultrasonic treatment method may be appropriately adopted as a method for the ultrasonic treatment in accordance with the scale of the treatment and the kind of the pressure-sensitive adhesive.

In the method for producing a water-soluble polymer according to the embodiment of the present invention, the temperature under a state in which the pressure-sensitive adhesive is impregnated with the pressure-sensitive adhesive treatment liquid is preferably 20°C or higher, more preferably 25°C or higher, still more preferably 30°C or higher, still more preferably 35°C or higher, still more preferably 40°C or higher, and particularly preferably 45°C or higher, and the upper limit value of the temperature is preferably 120°C or lower, more preferably 100°C or lower, and still more preferably 80°C or lower, according to one preferred embodiment. When the temperature under a state in which the pressure-sensitive adhesive is impregnated with the pressure-sensitive adhesive treatment liquid falls within the above-described range, the water-soluble polymer can be smoothly produced from the pressure-sensitive adhesive simply under a mild condition.

In the method for producing a water-soluble polymer according to the embodiment of the present invention, the water-soluble polymer is produced from a pressure-sensitive adhesive of a pressure-sensitive adhesive tape that includes a base material and the pressure-sensitive adhesive, according to another preferred embodiment. More specifically, firstly, a physical method can also be applied as a method for separating the pressure-sensitive adhesive tape into the base material and the pressure-sensitive adhesive. Specifically, the pressure-sensitive adhesive is scraped from the pressure-sensitive adhesive tape by using abrasive cloth, an abrasive belt, abrasive paper, a polishing brush, or the like, and the pressure-sensitive adhesive tape is separated into the base material and the pressure-sensitive adhesive. The separated pressure-sensitive adhesive is impregnated with the pressure-sensitive adhesive treatment liquid.

It is inferred that, in the method for producing a water-soluble polymer according to the embodiment of the present invention, the pressure-sensitive adhesive is swollen with the pressure-sensitive adhesive treatment liquid, and hydrolysis (including a saponification reaction in which an ester and a base react with each other to generate a salt and an alcohol) or the like is progressed by the liquid having a Hansen solubility parameter value of 31 or less, and the alkaline compound in the pressure-sensitive adhesive treatment liquid. By causing a reaction mainly including the saponification reaction, the water-soluble polymer can be efficiently produced. The activation energy required for the saponification is higher than the activation energy for transesterification. Therefore, by, for example, causing the reaction at a temperature (preferably from 20°C to 120°C) in the above-described range, the reaction can be appropriately controlled. Thus, the water-soluble polymer is formed from the pressure-sensitive adhesive, and is dissolved or dispersed in the pressure-sensitive adhesive treatment liquid according to the embodiment of the present invention. Such water-soluble polymer derived from the pressure-sensitive adhesive is further treated with a solvent as necessary, whereby the water-soluble polymer can be collected as a solution or a dispersion liquid. According to a preferred embodiment,

the water-soluble polymer can be collected as a solution in which the water-soluble polymer is dissolved in an aqueous solvent. Examples of the aqueous solvent include water, alcohol, a mixed solvent thereof, and a mixed solvent of water and/or alcohol and an organic solvent. The "water-soluble polymer derived from the pressure-sensitive adhesive" as used herein means a water-soluble polymer having a structure derived from a main polymer (also referred to as base polymer) used in the structure of the pressure-sensitive adhesive, and specifically means, for example, a water-soluble polymer having a structure in which at least part of functional groups (e.g., a carboxyl group and an ester group) present at the side chain terminals of the main polymer (may also be referred to as base polymer) for forming the pressure-sensitive adhesive are subjected to hydrolysis (including a saponification reaction in which an ester and a base react with each other to generate a salt and an alcohol) by the liquid having a Hansen solubility parameter value of 31 or less, and the alkaline compound in the pressure-sensitive adhesive treatment liquid.

In the method for producing a water-soluble polymer according to the embodiment of the present invention, the water-soluble polymer is simply obtained from the pressure-sensitive adhesive under a mild condition. It is inferred that hydrolysis (including a saponification reaction in which an ester and a base react with each other to generate a salt and an alcohol) of the pressure-sensitive adhesive simply progresses under a mild condition in the method for producing a water-soluble polymer according to the embodiment of the present invention, so that the water-soluble polymer is obtained.

To date, in order to perform the hydrolysis (including a saponification reaction in which an ester and a base react with each other to generate a salt and an alcohol) of the pressure-sensitive adhesive, the pressure-sensitive adhesive has been required to be subjected to the above-described reaction under high-temperature and high-pressure conditions, or the composition of the pressure-sensitive adhesive has been required to be designed to a limited composition. In the method for producing a water-soluble polymer according to the embodiment of the present invention, satisfactory hydrolysis (including a saponification reaction in which an ester and a base react with each other to generate a salt and an alcohol) of the pressure-sensitive adhesive can be simply caused under a mild condition without setting the high-temperature and high-pressure conditions, and without designing the composition of the pressure-sensitive adhesive to the limited composition.

««2. Water-soluble Polymer»»

The water-soluble polymer obtained by the method for producing a water-soluble polymer according to the embodiment of the present invention typically includes a structural unit (1) represented by the following formula and a structural unit (2) represented by the following formula.

[Chem. 3]

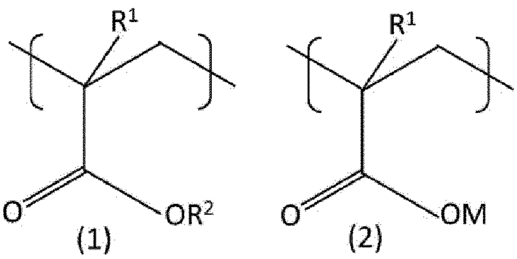

(1) (2)

(in the formulas, $R^1$ represents a hydrogen atom or a methyl group. $R^2$ represents an alkyl group having 1 to 12 carbon atoms. M represents a hydrogen atom or a cation.)

The water-soluble polymer typically includes a plurality of the structural units (1) and a plurality of the structural units (2). In the molecular chain of the water-soluble polymer, the structural units (1) and the structural units (2) are typically disposed at random.

In the structural unit (1) and the structural unit (2), $R^1$ represents a hydrogen atom or a methyl group, and preferably represents a hydrogen atom. In the plurality of the structural units (1), $R^1$s may be the same or different from each other. $R^1$s may be the same or different between the structural unit (1) and the structural unit (2). When the water-soluble polymer has the structural unit (1), a glass transition temperature of the water-soluble polymer is lowered, and flexibility at room temperature is enhanced. When the water-soluble polymer has the structural unit (2), the water-soluble polymer can be dissolved in water. When the water-soluble polymer has the structural units (1) and (2), the water-soluble polymer can become a material of an excellent water-soluble pressure-sensitive adhesive.

In the structural unit (1), for example, the alkyl group represented by $R^2$ preferably represents an alkyl group having 1 to 10 carbon atoms, and more preferably represents a methyl group, an ethyl group, an n-butyl group, or a 2-ethylhexyl group. In the plurality of the structural units (1), $R^2$s may be the same or different from each other.

In the structural unit (2), for example, the cation represented by M preferably represents an alkali metal cation or an alkaline earth metal cation, more preferably represents an alkali metal cation, and still more preferably represents a potassium cation or a sodium cation. In the plurality of the structural units (2), Ms may be the same or different from each other.
The content of the structural unit (1) in the water-soluble polymer is preferably 1 wt% or more, more preferably 3 wt% or more, still more preferably 5 wt% or more, and particularly preferably 10 wt% or more. The upper limit value of the content is preferably 95 wt% or less, more preferably 90 wt% or less, still more preferably 85 wt% or less, and particularly preferably 80 wt% or less.
The content of the structural unit (2) in the water-soluble polymer is preferably 5 wt% or more, more preferably 10 wt% or more, still more preferably 15 wt% or more, and particularly preferably 20 wt% or more. The upper limit value of the content is preferably 95 wt% or less, more preferably 90 wt% or less, still more preferably 87 wt% or less, and particularly preferably 85 wt% or less.
The content of the structural unit (1) with respect to the total of the contents of the structural unit (1) and the structural unit (2) is preferably 5 wt% or more, more preferably 7 wt% or more, and still more preferably 10 wt% or more. The upper limit value of the content is preferably 95 wt% or less, more preferably 90 wt% or less, still more preferably 93 wt% or less, and particularly preferably 90 wt% or less.
The content of the structural unit can be measured by, for example, an FT-IR method, an NMR method, or titrimetry.
The water-soluble polymer according to the embodiment of the present invention can be adopted as materials of various industrial products as appropriate. The water-soluble polymer according to the embodiment of the present invention can be suitably used as materials of pressure-sensitive adhesives or materials of water-absorbent polymers.

<<<<3. Method for Producing Water-absorbent Polymer>>>>

Examples of the method for producing a water-absorbent polymer according to an embodiment of the present invention include a method (hereinafter, may be referred to as "production method A") in which the water-soluble polymer obtained by the method for producing a water-soluble polymer according to the embodiment of the present invention is used to produce a water-absorbent polymer, and a method (hereinafter, may be referred to as "production method B") in which the water-absorbent polymer is produced directly from the pressure-sensitive adhesive as waste.

«3-1. Production Method A»

In the water-absorbent polymer production method A according to one embodiment of the present invention, the water-soluble polymer obtained by the method for producing a water-soluble polymer according to the embodiment of the present invention and a cross-linking agent are caused to react with each other. Water absorbing properties can be imparted to the polymer through the reaction between the water-soluble polymer and the cross-linking agent.
The cross-linking agent is an internal cross-linking agent, and can react with the structural unit of the water-soluble polymer. The usage amount of the cross-linking agent is preferably from 0.1 parts by weight to 200 parts by weight, more preferably from 1 part by weight to 150 parts by weight, and still more preferably from 1 part by weight to 100 parts by weight with respect to 100 parts by weight of the water-soluble polymer.
Examples of the cross-linking agent include a polymerizable cross-linking agent, a reactive cross-linking agent, and a cross-linking agent including both polymerizable and reactive ones.
The polymerizable cross-linking agent can react with an ethylenically unsaturated double bond in the water-soluble polymer. Specific examples of the polymerizable cross-linking agent include a compound having at least two polymerizable double bonds in a molecule, such as N,N'-methylenebisacrylamide, (poly)ethylene glycol di(meth)acrylate, (polyoxyethylene)trimethylolpropane tri(meth)acrylate, and poly(meth)allyloxy alkane.
The reactive cross-linking agent can react with a carboxyl group (more specifically, -COOM group in the structural unit (2)) in the water-soluble polymer. Specific examples of the reactive cross-linking agent include covalent cross-linking agents, such as polyglycidyl ethers (ethylene glycol diglycidyl ether, etc.) and polyhydric alcohols (ethylene glycol, polyethylene glycol, propanediol, glycerin, sorbitol, etc.), ionic cross-linking agents that are components of polyvalent metals such as aluminum, melamine resin-based cross-linking agents, amino resin-based cross-linking agents, peroxide-based cross-linking agents, and the above-described polyfunctional isocyanate-based cross-linking agents.
One kind of the cross-linking agent may be used alone, or two or more kinds thereof may be used in combination.
The cross-linking agent is preferably a reactive cross-linking agent, and more preferably ethylene glycol or polyethylene glycol.
In the water-absorbent polymer production method A according to one embodiment of the present invention, typically, the cross-linking agent is added to a solution of the water-soluble polymer (or dispersion liquid of the water-soluble polymer).

According to one preferred embodiment, the cross-linking agent is added to a solution of the water-soluble polymer (or a dispersion liquid of the water-soluble polymer), and the obtained product is thereafter stirred. As the stirring method, any appropriate stirring method can be adopted as appropriate.

According to one preferred embodiment, the water-soluble polymer and the cross-linking agent are caused to react with each other in the above-described pressure-sensitive adhesive treatment liquid (pressure-sensitive adhesive treatment liquid which contains the liquid having a Hansen solubility parameter value of 31 or less, and the alkaline compound and in which the concentration of the alkaline compound is from 0.001 wt% to 20 wt%). Thus, the polymer and the cross-linking agent can be caused to react with each other while hydrolysis (including saponification reaction) of the water-soluble polymer is further progressed, and the water-absorbent polymer can be smoothly produced.

The pressure-sensitive adhesive treatment liquid (hereinafter, referred to as treatment liquid for producing the water-absorbent polymer) used suitably for producing the water-absorbent polymer contains an alcohol preferably by 1 volume% or more and 90 volume% or less, more preferably by 1 volume% or more and 80 volume% or less, still more preferably by 1 volume% or more and 70 volume% or less, still more preferably by 1 volume% or more and 60 volume% or less, particularly preferably by 1 volume% or more and 50 volume% or less, and most preferably by 1 volume% or more and 40 volume% or less. When the pressure-sensitive adhesive treatment liquid contains an alcohol, a saponification reaction and transesterification of the alcohol can be progressed in the production of the water-absorbent polymer, and reactivity of the polymer with respect to the cross-linking agent can be suitably adjusted.

In the treatment liquid for producing the water-absorbent polymer, the Hansen solubility parameter value of the liquid is preferably 10 or more and 29 or less and the concentration of the alkaline compound is preferably 0.01 wt% or more and 8 wt% or less, and the Hansen solubility parameter value of the liquid is more preferably 13 or more and 25 or less and the concentration of the alkaline compound is more preferably 0.5 wt% or more and 5 wt% or less. When, in the treatment liquid for producing the water-absorbent polymer, the Hansen solubility parameter value of the liquid and the concentration of the alkaline compound fall within the above-described ranges, respectively, the saponification reaction and the transesterification can be progressed in a well-balanced manner, and the water-absorbent polymer can be stably produced. If the Hansen solubility parameter value of the liquid and/or the concentration of the alkaline compound are outside the above-described ranges, the saponification reaction may be excessively dominant in relation to the transesterification. In this case, reaction between the cross-linking agent and the polymer (or pressure-sensitive adhesive) may converge on the surface of the polymer (or pressure-sensitive adhesive), and the water-absorbent polymer may not be produced.

According to one preferred embodiment, the temperature at which the water-soluble polymer and the cross-linking agent react in the pressure-sensitive adhesive treatment liquid is preferably 15°C or higher, more preferably 20°C or higher, still more preferably 25°C or higher, still more preferably 30°C or higher, particularly preferably 35°C or higher, and most preferably 40°C or higher. The upper limit value of the temperature is preferably 80°C or lower, more preferably 70°C or lower, and still more preferably 60°C or lower. When the temperature at which the water-soluble polymer and the cross-linking agent react in the pressure-sensitive adhesive treatment liquid falls within the above-described range, the water-absorbent polymer can be smoothly produced from the water-soluble polymer and the cross-linking agent simply under a mild condition. By causing a reaction mainly including the transesterification, the water-absorbent polymer can be efficiently produced. The activation energy required for the transesterification is lower than the activation energy for saponification. Therefore, by, for example, causing the reaction at a temperature (preferably from 15°C to 80°C) in the above-described range, the reaction can be appropriately controlled.

In the water-absorbent polymer production method A according to one embodiment of the present invention, the water-absorbent polymer can be simply obtained through the water-soluble polymer from the pressure-sensitive adhesive as waste under a mild condition. It is inferred that reaction between the water-soluble polymer (in particular, -COOM group in the structural unit (2)) and the cross-linking agent is simply progressed under a mild condition in the water-absorbent polymer production method A according to one embodiment of the present invention, so that the water-absorbent polymer is obtained.

«3-2. Production Method B»

In the water-absorbent polymer production method B according to another embodiment of the present invention, the above-described pressure-sensitive adhesive treatment liquid (pressure-sensitive adhesive treatment liquid which contains the liquid having a Hansen solubility parameter value of 31 or less and the alkaline compound, and in which the concentration of the alkaline compound is from 0.001 wt% to 20 wt%), the cross-linking agent, and the pressure-sensitive adhesive are brought into contact with one another.

As a manner in which the pressure-sensitive adhesive treatment liquid, the cross-linking agent, and the pressure-sensitive adhesive are brought into contact with one another, any appropriate contact manner may be adopted to the extent that the effects of the present invention are not impaired. Examples of such contact manner include a manner in which, after the cross-linking agent is added to the pressure-sensitive adhesive treatment liquid, the pressure-sensitive

adhesive is added and they are brought into contact with one another, a manner in which the cross-linking agent and the pressure-sensitive adhesive are simultaneously added to the pressure-sensitive adhesive treatment liquid, and they are brought into contact with one another, and a manner in which, after the pressure-sensitive adhesive is added to the pressure-sensitive adhesive treatment liquid, the cross-linking agent is added and they are brought into contact with one another.

In the production method B as described above, the water-absorbent polymer is simply obtained directly from the pressure-sensitive adhesive as waste under a mild condition.

In the water-absorbent polymer production method B as described above, the above-described treatment liquid for producing the water-absorbent polymer is preferably used as the pressure-sensitive adhesive treatment liquid.

An amount of the cross-linking agent to be added is preferably from 0.1 parts by weight to 200 parts by weight, more preferably from 1 part by weight to 150 parts by weight, and still more preferably from 1 part by weight to 100 parts by weight with respect to 100 parts by weight of the pressure-sensitive adhesive.

A range of temperatures at which the pressure-sensitive adhesive treatment liquid, the cross-linking agent, and the pressure-sensitive adhesive are brought into contact with one another is, for example, the same as the range of the temperatures at which the above-described water-soluble polymer and the cross-linking agent react with each other in the pressure-sensitive adhesive treatment liquid.

Thus, in the production method B, the water-absorbent polymer can be simply obtained from the pressure-sensitive adhesive under a mild condition. It is inferred that hydrolysis (including a saponification reaction in which an ester and a base react with each other to generate a salt and an alcohol) of the pressure-sensitive adhesive is simply progressed under a mild condition, and a reaction between a carboxyl group (more specifically, -COOM group in the structural unit (2)) generated by the hydrolysis and the cross-linking agent is progressed to obtain the water-absorbent polymer.

<<<<4. Water-absorbent Polymer>>>>

The water-absorbent polymer according to an embodiment of the present invention typically includes a structural unit (1) represented by the following formula, a structural unit (2) represented by the following formula, and a cross-linked structure formed by the reaction between the structural unit (1) and/or the structural unit (2) represented by the following formulas, and the above-described cross-linking agent. The cross-linked structure is preferably formed by the reaction between the structural unit (2) represented by the following formula, and the above-described cross-linking agent.

[Chem. 4]

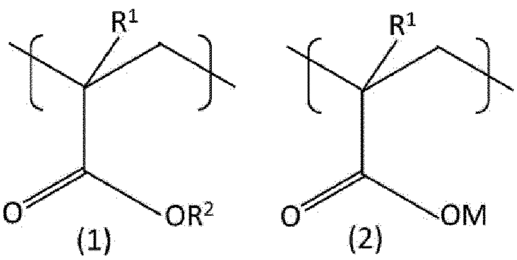

(1) (2)

(in the formulas, $R^1$ represents a hydrogen atom or a methyl group. $R^2$ represents an alkyl group having 1 to 12 carbon atoms. M represents a hydrogen atom or a cation.)

For $R^1$, $R^2$, and M of the structural unit (1) and the structural unit (2), description for $R^1$, $R^2$, and M of the structural unit (1) and the structural unit (2) in the above-described water-soluble polymer can be used.

For a content of the structural unit (1) in the water-absorbent polymer, description for the content of the structural unit (1) in the above-described water-soluble polymer can be used.

For the range of the total of the contents of the structural unit (2) and the cross-linked structure in the water-absorbent polymer, description for the range of the content of the structural unit (2) in the above-described water-soluble polymer can be used.

A content of the cross-linked structure in the water-absorbent polymer is preferably 1 wt% or more, more preferably 3 wt% or more, still more preferably 5 wt% or more, and particularly preferably 7 wt% or more. The upper limit value of the content is preferably 90 wt% or less, more preferably 85 wt% or less, still more preferably 80 wt% or less, and particularly preferably 75 wt% or less.

A content of the structural unit (1) with respect to the total of the contents of the structural unit (1) and the

structural unit (2) is preferably 3 wt% or more, more preferably 5 wt% or more, still more preferably 7 wt% or more, and particularly preferably 10 wt% or more. The upper limit value of the content is preferably 95 wt% or less, more preferably 90 wt% or less, still more preferably 85 wt% or less, and particularly preferably 80 wt% or less.

The water-absorbent polymer according to the embodiment of the present invention can be obtained by any appropriate method to the extent that the effects of the present invention are not impaired. Examples of such method include the method for producing the water-absorbent polymer according to the embodiment of the present invention.

Examples

The present invention is specifically described below by way of Examples. However, the present invention is by no means limited to these Examples. Test and evaluation methods in Examples and the like are as described below. The description "part(s)" means "part(s) by weight" unless otherwise specified, and the description "%" means "wt%" unless otherwise specified.

<Preparation of Pressure-sensitive Adhesive Tape>

The following pressure-sensitive adhesive tapes were prepared.

"E-MASK" series (manufactured by Nitto Denko Corporation), Product No. RP108C, acrylic pressure-sensitive adhesive
"E-MASK" series (manufactured by Nitto Denko Corporation), Product No. RP207, acrylic pressure-sensitive adhesive
"REVALPHA" series (manufactured by Nitto Denko Corporation), Product No. 3195MS(N), acrylic pressure-sensitive adhesive
Floor curing tape (manufactured by Nitto Denko Corporation), Product No. 395N, acrylic pressure-sensitive adhesive
"NITOFLON" series (manufactured by Nitto Denko Corporation), Product No. 973UL, silicone-based pressure-sensitive adhesive

<Preparation of Pressure-sensitive Adhesive Treatment Liquid>

[Preparation example 1]

Potassium hydroxide (KOH) was added to 1-butanol (HSP value=23.2) such that an alkali concentration of a treatment liquid to be obtained was 0.5 wt%, and a pressure-sensitive adhesive treatment liquid (1) was thus obtained. Table 1 collectively indicates the pressure-sensitive adhesive treatment liquids.

[Preparation example 2]

Potassium hydroxide (KOH) was added to a mixed solvent (HSP value=20.0) of cyclopentyl methyl ether (Cpme)/methanol at 70/30 (volume ratio) such that an alkali concentration of a treatment liquid to be obtained was 1.3 wt%, and a pressure-sensitive adhesive treatment liquid (2) was thus obtained. Table 1 collectively indicates the pressure-sensitive adhesive treatment liquids.

[Preparation example 3]

Potassium hydroxide (KOH) was added to a mixed solvent (HSP value=19.5) of cyclopentyl methyl ether (Cpme)/ethanol at 70/30 (volume ratio) such that an alkali concentration of a treatment liquid to be obtained was 1.3 wt%, and a pressure-sensitive adhesive treatment liquid (3) was thus obtained. Table 1 collectively indicates the pressure-sensitive adhesive treatment liquids.

[Preparation example 4]

Potassium hydroxide (KOH) was added to a mixed solvent (HSP value=18.9) of cyclopentyl methyl ether (Cpme)/2-propanol (IPA) at 70/30 (volume ratio) such that an alkali concentration of a treatment liquid to be obtained was 1.3 wt%, and a pressure-sensitive adhesive treatment liquid (4) was thus obtained. Table 1 collectively indicates the pressure-sensitive adhesive treatment liquids.

[Preparation example 5]

Potassium hydroxide (KOH) was added to a mixed solvent (HSP value=18.8) of cyclopentyl methyl ether (Cpme)/1-butanol at 70/30 (volume ratio) such that an alkali concentration of a treatment liquid to be obtained was 1.3 wt%, and a pressure-sensitive adhesive treatment liquid (5) was thus obtained. Table 1 collectively indicates the pressure-sensitive adhesive treatment liquids.

[Preparation example 6]

Potassium hydroxide (KOH) was added to a mixed solvent (HSP value=18.7) of cyclopentyl methyl ether (Cpme)/benzyl alcohol at 70/30 (volume ratio) such that an alkali concentration of a treatment liquid to be obtained was 1.3 wt%, and a pressure-sensitive adhesive treatment liquid (6) was thus obtained. Table 1 collectively indicates the pressure-sensitive adhesive treatment liquids.

[Preparation example 7]

Potassium hydroxide (KOH) was added to a mixed solvent (HSP value=18.7) of toluene/methanol at 80/20 (volume ratio) such that an alkali concentration of a treatment liquid to be obtained was 1.0 wt%, and a pressure-sensitive adhesive treatment liquid (7) was thus obtained. Table 1 collectively indicates the pressure-sensitive adhesive treatment liquids.

[Preparation example 8]

Potassium hydroxide (KOH) was added to a mixed solvent (HSP value=18.4) of toluene/1-butanol at 80/20 (volume ratio) such that an alkali concentration of a treatment liquid to be obtained was 1.0 wt%, and a pressure-sensitive adhesive treatment liquid (8) was thus obtained. Table 1 collectively indicates the pressure-sensitive adhesive treatment liquids.

[Preparation example 9]

Sodium ethoxide (NaOEt) was added to a mixed solvent (HSP value=24.8) of ethanol/1-butanol at 50/50 (volume ratio) such that an alkali concentration of a treatment liquid to be obtained was 5.0 wt%, and a pressure-sensitive adhesive treatment liquid (9) was thus obtained. Table 1 collectively indicates the pressure-sensitive adhesive treatment liquids.

[Preparation example 10]

Potassium hydroxide (KOH) was added to a mixed solvent (HSP value=15.3) of heptane/EKINEN (registered trademark) (F-6, manufactured by Japan Alcohol Trading CO., LTD) at 95/5 (volume ratio) such that an alkali concentration of a treatment liquid to be obtained was 2.0 wt%, and a pressure-sensitive adhesive treatment liquid (10) was thus obtained. Table 1 collectively indicates the pressure-sensitive adhesive treatment liquids.

[Preparation example 11]

Potassium hydroxide (KOH) was added to a mixed solvent (HSP value=15.5) of heptane/EKINEN (registered trademark) (F-6, manufactured by Japan Alcohol Trading CO., LTD ) at 90/10 (volume ratio) such that an alkali concentration of a treatment liquid to be obtained was 2.0 wt%, and a pressure-sensitive adhesive treatment liquid (11) was thus obtained. Table 1 collectively indicates the pressure-sensitive adhesive treatment liquids.

[Preparation example 12]

Potassium hydroxide (KOH) was added to a mixed solvent (HSP value=17.7) of cyclopentyl methyl ether (Cpme)/methanol at 50/50 (volume ratio) such that an alkali concentration of a treatment liquid to be obtained was 10 wt%, and a pressure-sensitive adhesive treatment liquid (12) was thus obtained. Table 1 collectively indicates the pressure-sensitive adhesive treatment liquids.

[Preparation example 13]

Potassium hydroxide (KOH) was added to a mixed solvent (HSP value=17.7) of cyclopentyl methyl ether

(Cpme)/methanol at 50/50 (volume ratio) such that an alkali concentration of a treatment liquid to be obtained was 14 wt%, and a pressure-sensitive adhesive treatment liquid (13) was thus obtained. Table 1 collectively indicates the pressure-sensitive adhesive treatment liquids.

[Preparation example 14]

Potassium hydroxide (KOH) was added to a mixed solvent (HSP value=23.2) of methyl ethyl ketone (MEK)/methanol at 50/50 (volume ratio) such that an alkali concentration of a treatment liquid to be obtained was 20 wt%, and a pressure-sensitive adhesive treatment liquid (14) was thus obtained. Table 1 collectively indicates the pressure-sensitive adhesive treatment liquids.

[Preparation example 15]

Potassium hydroxide (KOH) was added to a mixed solvent (HSP value=29.5) of 1-butanol/methanol/water at 40/40/20 (volume ratio) such that an alkali concentration of a treatment liquid to be obtained was 1.3 wt%, and a pressure-sensitive adhesive treatment liquid (15) was thus obtained. Table 1 collectively indicates the pressure-sensitive adhesive treatment liquids.

[Preparation example 16]

Sodium hydroxide (NaOH) was added to a mixed solvent (HSP value=21.2) of methyl ethyl ketone (MEK)/methanol at 70/30 (volume ratio) such that an alkali concentration of a treatment liquid to be obtained was 0.8 wt%, and a pressure-sensitive adhesive treatment liquid (16) was thus obtained. Table 1 collectively indicates the pressure-sensitive adhesive treatment liquids.

[Preparation example 17]

Sodium hydroxide (NaOH) was added to a mixed solvent (HSP value=21.2) of methyl ethyl ketone (MEK)/methanol at 70/30 (volume ratio) such that an alkali concentration of a treatment liquid to be obtained was 1.3 wt%, and a pressure-sensitive adhesive treatment liquid (17) was thus obtained. Table 1 collectively indicates the pressure-sensitive adhesive treatment liquids.

[Preparation example 18]

Potassium hydroxide (KOH) was added to a mixed solvent (HSP value=21.2) of methyl ethyl ketone (MEK)/methanol at 70/30 (volume ratio) such that an alkali concentration of a treatment liquid to be obtained was 5.0 wt%, and a pressure-sensitive adhesive treatment liquid (18) was thus obtained. Table 1 collectively indicates the pressure-sensitive adhesive treatment liquids.

[Preparation example 19]

Potassium hydroxide (KOH) was added to a mixed solvent (HSP value=18.8) of decane/butanol at 40/60 (volume ratio) such that an alkali concentration of a treatment liquid to be obtained was 1.5 wt%, and a pressure-sensitive adhesive treatment liquid (19) was thus obtained. Table 1 collectively indicates the pressure-sensitive adhesive treatment liquids.

[Preparation example 20]

Potassium hydroxide (KOH) was added to a mixed solvent (HSP value=28.9) of 1-butanol/methanol/water at 60/20/20 (volume ratio) such that an alkali concentration of a treatment liquid to be obtained was 5.0 wt%, and a pressure-sensitive adhesive treatment liquid (20) was thus obtained. Table 1 collectively indicates the pressure-sensitive adhesive treatment liquids.

[Preparation example 21]

Potassium hydroxide (KOH) was added to a mixed solvent (HSP value=26.9) of 1-butanol/2-propanol (IPA)/water at 70/10/20 (volume ratio) such that an alkali concentration of a treatment liquid to be obtained was 5.0 wt%, and a pressure-sensitive adhesive treatment liquid (21) was thus obtained. Table 1 collectively indicates the pressure-sensitive

adhesive treatment liquids.

[Preparation example 22]

Potassium hydroxide (KOH) was added to a mixed liquid (HSP value=34.0) of ethanol/water at 65/35 (volume ratio) such that an alkali concentration of a treatment liquid to be obtained was 0.5 wt%, and a pressure-sensitive adhesive treatment liquid (C1) was thus obtained. Table 1 collectively indicates the pressure-sensitive adhesive treatment liquids.

[Preparation example 23]

A mixed solvent (HSP value=17.7) of cyclopentyl methyl ether (Cpme)/methanol at 50/50 (volume ratio) was used as a pressure-sensitive adhesive treatment liquid (C2). Table 1 collectively indicates the pressure-sensitive adhesive treatment liquids.

[Preparation example 24]

Potassium hydroxide (KOH) was added to a mixed solvent (HSP value=23.2) of methyl ethyl ketone (MEK)/methanol at 50/50 (volume ratio) such that an alkali concentration of a treatment liquid to be obtained was 25.0 wt%, and a pressure-sensitive adhesive treatment liquid (C3) was thus obtained. Table 1 collectively indicates the pressure-sensitive adhesive treatment liquids.

[Preparation example 25]

Potassium hydroxide (KOH) was added to a mixed solvent (HSP value=33.5) of benzyl alcohol/methanol/water at 40/20/40 (volume ratio) such that an alkali concentration of a treatment liquid to be obtained was 1.3 wt%, and a pressure-sensitive adhesive treatment liquid (C4) was thus obtained. Table 1 collectively indicates the pressure-sensitive adhesive treatment liquids.

[Table 1]

| Pressure-sensitive adhesive treatment liquid | Liquid in pressure-sensitive adhesive treatment liquid | | Alkali concentration (wt%) | |
|---|---|---|---|---|
| | Kind (volume ratio) | HSP value | | |
| (C1) | ethanol/water=65/35 | 34.0 | KOH | 0.5 |
| (1) | 1-butanol | 23.2 | | 0.5 |
| (2) | Cpme/methanol=70/30 | 20.0 | | 1.3 |
| (3) | Cpme/ethanol=70/30 | 19.5 | | 1.3 |
| (4) | Cpme/IPA=70/30 | 18.9 | | 1.3 |
| (5) | Cpme/1-butanol=70/30 | 18.8 | | 1.3 |
| (6) | Cpme/benzyl alcohol=70/30 | 18.7 | | 1.3 |
| (7) | toluene/methanol=80/20 | 18.7 | | 1.0 |
| (8) | toluene/1-butanol=80/20 | 18.4 | | 1.0 |
| (9) | ethanol/1-butanol=50/50 | 24.8 | NaOEt | 5.0 |
| (10) | heptane/EKINEN=95/5 | 15.3 | KOH | 2.0 |
| (11) | heptane/EKINEN=90/10 | 15.5 | | 2.0 |
| (12) | Cpme/methanol=50/50 | 17.7 | | 10.0 |
| (13) | | | | 14.0 |
| (14) | methyl ethyl ketone/ methanol=50/50 | 23.2 | | 20.0 |
| (15) | 1-butanol/methanol/ water=40/40/20 | 29.5 | | 1.3 |

(continued)

| Pressure-sensitive adhesive treatment liquid | Liquid in pressure-sensitive adhesive treatment liquid | | Alkali concentration (wt%) | |
|---|---|---|---|---|
| | Kind (volume ratio) | HSP value | | |
| (16) | methyl ethyl ketone/ methanol=70/30 | 21.2 | NaOH | 0.8 |
| (17) | | | | 1.3 |
| (18) | | | KOH | 5.0 |
| (19) | decane/butanol=40/60 | 18.8 | KOH | 1.5 |
| (20) | 1-butanol/methanol/ water=60/20/20 | 28.9 | KOH | 5.0 |
| (21) | 1-butanol/IPA/water=70/10/20 | 26.9 | KOH | 5.0 |
| (C2) | Cpme/methanol=50/50 | 17.7 | - | 0 |
| (C3) | methyl ethyl ketone/ methanol=50/50 | 23.2 | KOH | 25.0 |
| (C4) | benzyl alcohol/methanol/ water=40/20/40 | 33.5 | | 1.3 |

[Examples 1 to 18 and Comparative examples 1 to 4]

<Production of Water-soluble Polymer>

An abrasive belt of a belt sander (BE-3210, manufactured by RYOBI) having the abrasive belt (grain size=#100, manufactured by Makita Corporation) mounted thereto was pressed against each of the pressure-sensitive adhesive tapes indicated in Table 2 at a belt speed of 5.8 m/second, and the pressure-sensitive adhesive for forming the pressure-sensitive adhesive layer was separated from the base material.

In a vial bottle, 0.7 g of the isolated pressure-sensitive adhesive was put, and 20 g of the pressure-sensitive adhesive treatment liquid was added thereto, and the obtained product was stirred at a stirring speed of 600 rpm at 50°C for 12 hours. Thereafter, a solvent was removed by decantation, and a polymer was obtained. A large amount of water was added to the obtained polymer, and solubility with respect to water was evaluated. Table 2 indicates the results.

◦: The polymer was completely dissolved in water.
△: Most of the polymer was dissolved in water, but some amount of dissolution residue was present.
×: The polymer was not dissolved in water.

Subsequently, the polymers obtained in Examples 2, 4, and 5 were analyzed by IR and/or NMR, and it was confirmed that the water-soluble polymers each having the following structural units were obtained. Table 2 indicates the contents of the structural unit (I) and the structural unit (II) in the water-soluble polymer produced from the acrylic pressure-sensitive adhesive "E-MASK" RP108C (manufactured by Nitto Denko Corporation).

[Chem. 5]

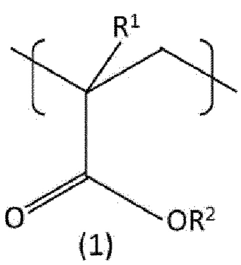
(1)

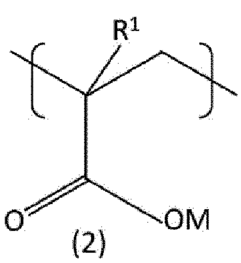
(2)

(in the formulas, $R^1$ represents a hydrogen atom. $R^2$ represents an alkyl group having 1 to 4 carbon atoms. M represents a potassium cation or a sodium cation.)

[Table 2]

| No. | | | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| Pressure-sensitive adhesive treatment liquid | Preparation example | | | (1) | (2) | (3) | (4) | (5) | (6) | (7) | (8) |
| | Composition | | | 1-butanol | Cpme/alcohol mixture based | | | | | toluene/alcohol mixture based | |
| | HSP value | | | 23.2 | 20.0 | 19.5 | 18.9 | 18.8 | 18.7 | 18.7 | 18.4 |
| | Kind of alkali | | | KOH | | | | | | | |
| | Alkali concentration (wt%) | | | 0.5 | 1.3 | 1.3 | 1.3 | 1.3 | 1.3 | 1.3 | 1.3 |
| Production of water-soluble polymer | E-MASK | RP108C | Acrylic pressure-sensitive adhesive | ○ | ○ | ○ | ○ | ○ | ○ | ○ | ○ |
| | REVALPHA | No. 3195MS(N) | | ○ | ○ | - | - | - | - | - | - |
| | Floor curing tape | No. 395N | | - | ○ | - | - | - | - | - | - |
| | Structural unit (I) | | (wt%) | - | 55 | 41 | - | 13 | - | - | - |
| | Structural unit (II) | | | - | 45 | 59 | - | 87 | - | - | - |
| | NITOFLON | No. 973UL | Silicone-based pressure-sensitive adhesive | ○ | ○ | - | - | - | - | - | - |

[Table 2] (cont.)

| No. | | | | Ex. 9 | Ex. 10 | Ex. 11 | Ex. 12 | Ex. 13 | Ex. 14 | Ex. 15 |
|---|---|---|---|---|---|---|---|---|---|---|
| Pressure-sensitive adhesive treatment liquid | Preparation example | | | (9) | (10) | (11) | (12) | (13) | (14) | (15) |
| | Composition | | | alcohol mixture based | heptane/alcohol mixture based | | Cpme/alcohol mixture based | | MEK/alcohol mixture based | water/alcohol mixture based |
| | HSP value | | | 24.8 | 15.3 | 15.5 | 17.7 | | 23.2 | 29.5 |
| | Kind of alkali | | | NaOEt | KOH | | | | | |
| | Alkali concentration (wt%) | | | 5 | 2.0 | 2.0 | 10.0 | 14.0 | 20.0 | 1.3 |
| Production of water-soluble polymer | E-MASK | RP108C | Acrylic pressure-sensitive adhesive | ○ | ○ | ○ | ○ | ○ | ○ | ○ |
| | REVALPHA | No. 3195MS(N) | | - | - | - | - | - | - | - |
| | Floor curing tape | No. 395N | | - | - | - | - | - | - | - |
| | Structural unit (I) | | (wt%) | - | - | - | - | - | - | - |
| | Structural unit (II) | | | - | - | - | - | - | - | - |
| | NITOFLON | No. 973UL | Silicone-based pressure-sensitive adhesive | - | - | - | - | - | - | - |

[Table 2] (cont.)

| No. | | | | Ex. 16 | Ex. 17 | Ex. 18 | Comp. Ex. 1 | Comp. Ex. 2 | Comp. Ex. 3 | Comp. Ex. 4 |
|---|---|---|---|---|---|---|---|---|---|---|
| Pressure-sensitive adhesive treatment liquid | Preparation example | | | (16) | (17) | (18) | (C1) | (C2) | (C3) | (C4) |
| | Composition | | | MEK/alcohol mixture based | | | water/ethanol mixture based | Cpme/alcohol mixture based | MEK/alcohol mixture based | water/alcohol mixture based |
| | HSP value | | | 21.2 | | | 34.0 | 17.7 | 23.2 | 33.5 |
| | Kind of alkali | | | NaOH | | KOH | KOH | - | KOH | KOH |
| | Alkali concentration (wt%) | | | 0.8 | 1.3 | 5.0 | 0.5 | 0 | 25.0 | 1.3 |
| Production of water-soluble polymer | E-MASK | RP108C | Acrylic pressure-sensitive adhesive | ○ | ○ | ○ | × | × | × | × |
| | REVALPHA | No. 3195MS(N) | | - | - | - | - | - | - | - |
| | Floor curing tape | No. 395N | | - | - | - | - | - | - | - |
| | Structural unit (I) | | (wt%) | - | - | - | - | - | - | - |
| | Structural unit (II) | | | - | - | - | - | - | - | - |
| | NITOFLON | No. 973UL | Silicone-based pressure-sensitive adhesive | - | - | - | - | - | - | - |

[Examples 19 to 31 and Comparative examples 5 to 8]

<Production of Water-absorbent Polymer>

An abrasive belt of a belt sander (BE-3210, manufactured by RYOBI) having the abrasive belt (grain size=#100, manufactured by Makita Corporation) mounted thereto was pressed against each of the pressure-sensitive adhesive tapes indicated in Table 3 at a belt speed of 5.8 m/second, and the pressure-sensitive adhesive for forming the pressure-sensitive adhesive layer was separated from the base material.

In a 50 ml sample tube, 0.7 g of the isolated pressure-sensitive adhesive was put, 20 g of the pressure-sensitive

adhesive treatment liquid which was obtained in each of the preparation examples indicated in Table 3 was added thereto, 0.1 g (0.01 g in Examples 30, 31) of the corresponding cross-linking agent indicated in Table 3 was added thereto, and the obtained product was stirred at a stirring speed of 600 rpm at 50°C for 12 hours. Thus, the water-absorbent polymer was precipitated.

Thereafter, a solvent was removed by decantation, and the water-absorbent polymer was dried at 120°C for 1.5 hours.

Subsequently, the dried water-absorbent polymer was ground in a mortar, and water absorbency was evaluated in accordance with JIS K 7223-1996 (tea bag method). Table 3 indicates the results.

◦: The water absorptivity was 10-fold or more.
×: The water absorptivity was less than 10-fold.

[Table 3]

| No. | | | | Ex. 19 | Ex. 20 | Ex. 21 | Ex. 22 | Ex. 23 | Ex. 24 | Ex. 25 | Ex. 26 | Ex. 27 | Ex. 28 | Ex. 29 |
|---|---|---|---|---|---|---|---|---|---|---|---|---|---|---|
| Pressure-sensitive adhesive treatment liquid | Preparation example | | | (2) | | | | | (10) | (11) | (16) | (17) | (18) | (19) |
| | Composition | | | Cpme/alcohol mixture based | | | | | heptane/alcohol mixture based | | MEK/alcohol mixture based | | | decane/butanol mixture based |
| | HSP value | | | 20.0 | | | | | 15.3 | 15.5 | 21.2 | | | 18.8 |
| | Kind of alkali | | | KOH | | | | | | | NaOH | | KOH | KOH |
| | Alkali concentration (wt%) | | | 1.3 | | | | | 2.0 | 2.0 | 0.8 | 1.3 | 5.0 | 1.5 |
| Cross-linking agent | | | | EG | PEG-200 | PEG-400 | EG | | | | | | | |
| Production of water-absorbent polymer | E-MASK | RP108C | Acrylic pressure-sensitive adhesive | ○ | ○ | ○ | - | - | ○ | ○ | ○ | ○ | ○ | ○ |
| | | RP207 | | ○ | - | - | - | - | - | - | ○ | ○ | ○ | - |
| | REVALPHA | No. 3195MS(N) | | - | - | - | ○ | - | - | - | - | - | - | - |
| | Floor curing tape | No.395N | | - | - | - | - | ○ | - | - | - | - | - | - |

[Table 3] (cont.)

| No. | | | | Ex. 30 | Ex. 31 | Comp. Ex. 5 | Comp. Ex. 6 | Comp. Ex. 7 | Comp. Ex. 8 |
|---|---|---|---|---|---|---|---|---|---|
| Pressure-sensitive adhesive treatment liquid | Preparation example | | | (20) | (21) | (C1) | (C2) | (C3) | (C4) |
| | Composition | | | water/butanol mixture based | | water/ethanol mixture based | Cpme/alcohol mixture based | MEK/alcohol mixture based | water/alcohol mixture based |
| | HSP value | | | 28.9 | 26.9 | 34.0 | 17.7 | 23.2 | 33.5 |
| | Kind of alkali | | | KOH | KOH | KOH | - | KOH | KOH |
| | Alkali concentration (wt%) | | | 5.0 | 5.0 | 0.5 | 0 | 25.0 | 1.3 |
| Cross-linking agent | | | | EG (0.05 parts by weight ) | | EG | | | |
| Production of water-absorbent polymer | E-MASK | RP108C | Acrylic pressure-sensitive adhesive | - | - | × | × | × | × |
| | | RP207 | | ○ | ○ | × | × | × | × |
| | REVALPHA | No. 3195MS(N) | | - | - | - | - | - | - |
| | Floor curing tape | No.395N | | - | - | - | - | - | - |

In Table 3, abbreviations for the cross-linking agents are as follows.

EG; ethylene glycol
PEG-200; polyethylene glycol (number-average molecular weight Mn was 200)
PEG-400; polyethylene glycol (number-average molecular weight Mn was 400)

INDUSTRIAL APPLICABILITY

The method for producing a water-soluble polymer and the method for producing a water-absorbent polymer

according to the embodiment of the present invention allow the water-soluble polymers and the water-absorbent polymers to be produced from various kinds of pressure-sensitive adhesives under a mild condition, and can thus be suitably used for recycling waste of pressure-sensitive adhesives generated in a large amount in production sites and the like.

## Claims

1. A method for producing a water-soluble polymer, the method comprising bringing a pressure-sensitive adhesive treatment liquid which contains a liquid having a Hansen solubility parameter value of 31 or less and an alkaline compound and in which a concentration of the alkaline compound in the pressure-sensitive adhesive treatment liquid is from 0.001 wt% to 20 wt%, into contact with a pressure-sensitive adhesive.

2. The method for producing a water-soluble polymer according to claim 1, wherein

   the Hansen solubility parameter value of the liquid is 15 or more and 25 or less, and
   the liquid contains a lower alcohol.

3. The method for producing a water-soluble polymer according to claim 1 or 2, wherein the pressure-sensitive adhesive is formed of an acrylic pressure-sensitive adhesive.

4. The method for producing a water-soluble polymer according to any one of claims 1 to 3, wherein the concentration of the alkaline compound in the treatment liquid is from 0.01 wt% to 10 wt%.

5. A water-soluble polymer obtained by the method for producing a water-soluble polymer according to any one of claims 1 to 4, the water-soluble polymer comprising a structural unit (1) represented by a following formula, and a structural unit (2) represented by a following formula,

   [Chem. 1]

   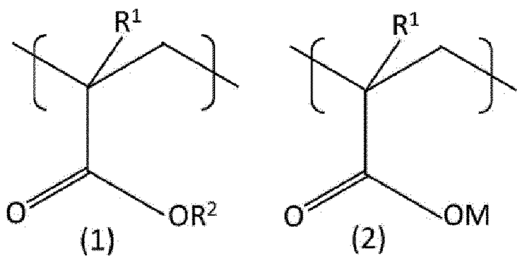

   (1) (2)

   (in the formulas, $R^1$ represents a hydrogen atom or a methyl group, $R^2$ represents an alkyl group having 1 to 12 carbon atoms, and M represents a hydrogen atom or a cation).

6. A method for producing a water-absorbent polymer, the method comprising causing the water-soluble polymer obtained by the method for producing a water-soluble polymer according to any one of claims 1 to 4, and a cross-linking agent to react with each other.

7. A method for producing a water-absorbent polymer, the method comprising bringing a pressure-sensitive adhesive treatment liquid which contains a liquid having a Hansen solubility parameter value of 31 or less and an alkaline compound and in which a concentration of the alkaline compound in the pressure-sensitive adhesive treatment liquid is from 0.001 wt% to 20 wt%, a cross-linking agent, and a pressure-sensitive adhesive into contact with one another.

8. A water-absorbent polymer comprising a structural unit (1) represented by a following formula, a structural unit (2) represented by a following formula, and a cross-linked structure formed by a reaction between the structural unit (1) and/or the structural unit (2), and a cross-linking agent,

[Chem. 2]

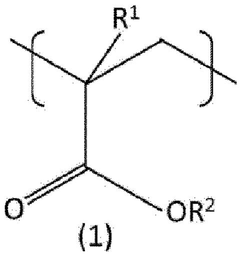

(1)

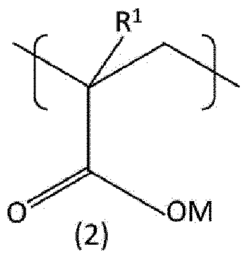

(2)

(in the formulas, $R^1$ represents a hydrogen atom or a methyl group, $R^2$ represents an alkyl group having 1 to 12 carbon atoms, and M represents a hydrogen atom or a cation).

## INTERNATIONAL SEARCH REPORT

International application No.
**PCT/JP2022/025770**

**A. CLASSIFICATION OF SUBJECT MATTER**

***C08J 3/00***(2006.01)i; ***B29B 17/00***(2006.01)i; ***C08J 11/08***(2006.01)i; ***C08L 33/02***(2006.01)i; ***C09J 133/00***(2006.01)i
FI: C08J3/00; B29B17/00; C08J11/08 ZAB; C08L33/02; C09J133/00

According to International Patent Classification (IPC) or to both national classification and IPC

**B. FIELDS SEARCHED**

Minimum documentation searched (classification system followed by classification symbols)

C08J3/00; B29B17/00; C08J11/08; C08L33/02; C09J133/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 06-041592 A (SEKISUI CHEMICAL CO., LTD.) 15 February 1994 (1994-02-15) claims, paragraphs [0014], [0022]-[0052], examples, in particular example 4 | 1-5 |
| X | JP 2003-292994 A (THE NIPPON SYNTHETIC CHEMICAL INDUSTRY CO., LTD.) 15 October 2003 (2003-10-15) claims, paragraphs [0008], [0015], [0102]-[0133], examples | 1-5 |
| X | KR 10-2011-0018226 A (KOREA INSTITUTE OF FOOTWEAR & LEATHER TECHNOLOGY) 23 February 2011 (2011-02-23) claims, paragraphs [0025]-[0059], examples | 1-4 |
| X | JP 10-195492 A (KAO CORPORATION) 28 July 1998 (1998-07-28) claims, paragraphs [0070]-[0090], examples, table 1 | 1-4 |
| X | JP 06-128539 A (NITTO DENKO CORPORATION) 10 May 1994 (1994-05-10) claims, paragraphs [0010], [0017]-[0031], examples | 7 |
| X | JP 01-292004 A (SEKISUI PLASTICS CO., LTD.) 24 November 1989 (1989-11-24) claims, p. 2, lower right column, line 6 to p. 3, upper left column, line 8, p. 4, lower left column, line 16 to p. 7, upper left column, line 14, examples | 8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 August 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**

International application No.
**PCT/JP2022/025770**

**C. DOCUMENTS CONSIDERED TO BE RELEVANT**

| Category* | Citation of document, with indication, where appropriate, of the relevant passages | Relevant to claim No. |
|---|---|---|
| X | JP 57-044627 A (SEITETSU KAGAKU CO., LTD.) 13 March 1982 (1982-03-13) claims, p. 2, lower right column, line 2 to p. 7, lower right column, last line | 8 |
| A | JP 08-041433 A (THE NIPPON SYNTHETIC CHEMICAL INDUSTRY CO., LTD.) 13 February 1996 (1996-02-13) claims, examples, entire text | 1-8 |
| A | JP 07-150118 A (SEKISUI CHEMICAL CO., LTD.) 13 June 1995 (1995-06-13) claims, examples, entire text | 1-8 |
| A | KR 10-2012-0006937 A (LG CHEM. LTD.) 19 January 2012 (2012-01-19) claims, examples, entire text | 1-8 |
| P, X | WO 2022/004609 A1 (NITTO DENKO CORPORATION) 06 January 2022 (2022-01-06) claims, paragraphs [0207]-[0249], examples | 1-5 |

Form PCT/ISA/210 (second sheet) (January 2015)

INTERNATIONAL SEARCH REPORT

International application No.
PCT/JP2022/025770

**Box No. III Observations where unity of invention is lacking (Continuation of item 3 of first sheet)**

This International Searching Authority found multiple inventions in this international application, as follows:

(Invention 1) Claims 1-6

Documents 1 and 2 disclose cleaning methods in which a detergent composition is brought into contact with an adhesive, the detergent composition containing a liquid having a Hansen solubility parameter value of 31 or lower, such as isopropanol, and an alkali compound, with the concentration of the alkali compound being in a range that overlaps with the present invention. In the documents, an acrylic polymer adhesive having containing a structural formula similar to structural units (1) and (2) of the present invention is given as an example of the adhesive, and it is indicated that the adhesive is dissolved in a detergent composition. The cleaning method is considered to be a method for producing a water-soluble polymer in view of the disclosures of the present invention. Therefore, claims 1-5 lack novelty in light of document 1 and do not have special technical features. However, claim 6 depending from claim 1 has the special technical feature of "a method for producing a water-absorbing polymer, in which method, a crosslinking agent is reacted with the water-soluble polymer obtained by the method for producing a water-soluble polymer according to any one of claims 1-4." Therefore, claims 1-6 are classified as invention 1.

(Invention 2) Claim 7

Claim 7 cannot be said to share the same or corresponding features with claim 6 classified as invention 1.

Furthermore, claim 7 is not substantially identical to or similarly closely related to any of the claims classified as invention 1.

Therefore, claim 7 cannot be classified as invention 1.

Claim 7 is classified as invention 2 as a result of having the special technical feature of "a method for producing a water-absorbing polymer."

(Invention 3) Claim 8

Claim 8 cannot be said to share the same or corresponding features with claim 6 classified as invention 1 or claim 7 classified as invention 2.

Furthermore, claim 8 is not substantially identical to or similarly closely related to any of the claims classified as invention 1 or invention 2.

Therefore, claim 8 cannot be classified as either invention 1 or invention 2.

Claim 8 is classified as invention 3 as a result of having the special technical feature of "a water-absorbing polymer including: a structural unit (1) represented by the formula below; a structural unit (2) represented by the formula below; and a crosslinking structure formed by a reaction between the structural unit (1) and/or the structural unit (2) (formula omitted) and a crosslinking agent."

Form PCT/ISA/210 (continuation of first sheet) (January 2015)

INTERNATIONAL SEARCH REPORT

International application No.
**PCT/JP2022/025770**

**Box No. III Observations where unity of invention is lacking (Continuation of item 3 of first sheet)**

1. ☐ As all required additional search fees were timely paid by the applicant, this international search report covers all searchable claims.
2. ☑ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:
4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/025770**

| Patent document cited in search report | Publication date (day/month/year) | Patent family member(s) | Publication date (day/month/year) |
|---|---|---|---|
| JP 06-041592 A | 15 February 1994 | (Family: none) | |
| JP 2003-292994 A | 15 October 2003 | (Family: none) | |
| KR 10-2011-0018226 A | 23 February 2011 | (Family: none) | |
| JP 10-195492 A | 28 July 1998 | US 5954891 A<br>claims, column 15, line 8 to column 24, line 6, examples, table 1<br>EP 0853116 A1<br>CN 1197113 A | |
| JP 06-128539 A | 10 May 1994 | (Family: none) | |
| JP 01-292004 A | 24 November 1989 | (Family: none) | |
| JP 57-044627 A | 13 March 1982 | (Family: none) | |
| JP 08-041433 A | 13 February 1996 | (Family: none) | |
| JP 07-150118 A | 13 June 1995 | (Family: none) | |
| KR 10-2012-0006937 A | 19 January 2012 | (Family: none) | |
| WO 2022/004609 A1 | 06 January 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3917178 B
- JP 2002069411 A
- JP 2014047280 A